(19) Europäisches Patentamt
European Patent Office
Office européen des brevets

(11) **EP 1 248 132 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
***G02B 21/00*** *(2006.01)*        ***G01N 21/63*** *(2006.01)*
***G01B 11/24*** *(2006.01)*

(21) Anmeldenummer: **02007111.4**

(22) Anmeldetag: **28.03.2002**

(54) **Verfahren und Anordnung zur tiefenaufgelösten optischen Erfassung einer Probe**

Method and arrangement for depth resolving optical detection of a probe

Méthode et dispositif de détection optique à résolution de la profondeur d'un échantillon

(84) Benannte Vertragsstaaten:
**AT BE CH CY DE DK ES FI FR GB GR IE IT LI LU MC NL PT SE TR**

(30) Priorität: **07.04.2001 DE 10118463**
**08.11.2001 DE 10155002**

(43) Veröffentlichungstag der Anmeldung:
**09.10.2002 Patentblatt 2002/41**

(73) Patentinhaber: **Carl Zeiss MicroImaging GmbH**
**Carl-Zeiss-Promenade 10**
**07745 Jena (DE)**

(72) Erfinder:
• **Wolleschensky, Ralf**
**07743 Jena (DE)**
• **Kempe, Michael, Dr.**
**07751 Kunitz (DE)**

(74) Vertreter: **Hampe, Holger**
**c/o Carl Zeiss AG**
**Standort Jena**
**Carl-Zeiss-Promenade 10**
**07745 Jena (DE)**

(56) Entgegenhaltungen:
WO-A-98/45745        WO-A-98/52021
DE-A- 19 930 816     US-A- 4 929 951
US-A- 5 003 187      US-A- 5 381 236
US-A- 5 867 604

• **GRUBER M ET AL: "SIMPLE, ROBUST AND ACCURATE PHASE-MEASURING TRIANGULATION" , OPTIK, WISSENSCHAFTLICHE VERLAG GMBH.STUTTGART, DE, VOL. 89, NR. 3, PAGE(S) 118-122 XP000247177 ISSN: 0030-4026 * Seite 118, rechte Spalte - Seite 120, rechte Spalte; Abbildungen 1,3,6 ***

**Beschreibung**

Die Erfindung bezieht sich auf ein Verfahren und eine Anordnung in der Mikroskopie, insbesondere der Fluoreszenz Laser Scanning Mikroskopie zur Untersuchung von vorwiegend biologischen Proben, Präparaten und zugehörigen Komponenten. Mit eingeschlossen sind auf Fluoreszenzdetektion basierenden Verfahren zum Screenen von Wirkstoffen (High Throughput Sceening) sowie auf anderen Kontrastmechanismen basierende Methoden der Laser Scanning Mikroskopie.

**Stand der Technik**

Ein klassisches Anwendungsgebiet der Lichtmikroskopie zur Untersuchung von biologischen Präparaten ist die Fluoreszenzmikroskopie (Lit.: Pawley, "Handbook of Biological Confocal Microscopy"; Plenum Press 1995). Hierbei werden bestimmte Farbstoffe zur spezifischen Markierung von Zellteilen verwendet.

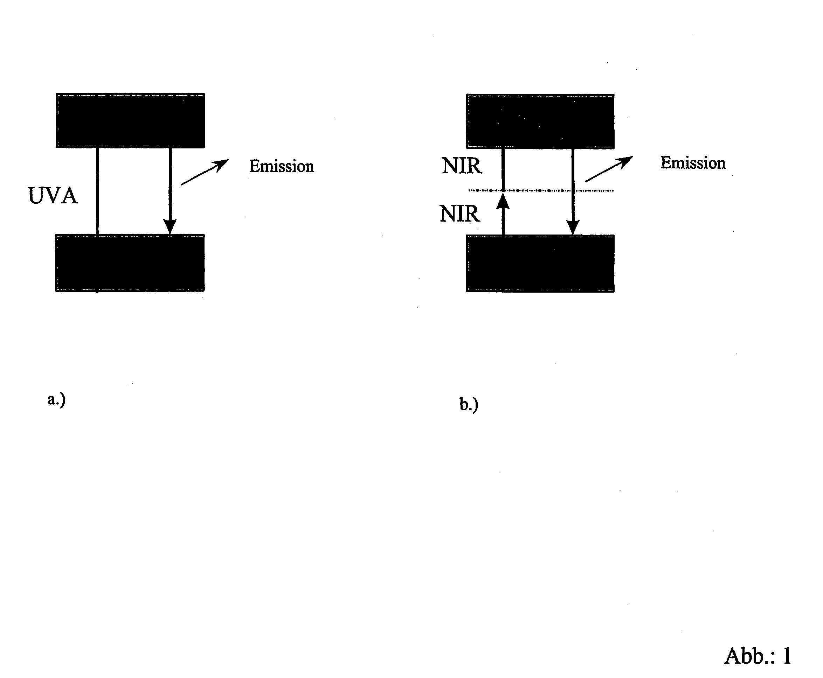

Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.

Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen möglich. Grundsätzlich können jedoch auch mehrere Teile eines Präparates gleichzeitig, mit verschiedenen sich spezifisch anlagernden Farbstoffen eingefärbt werden (Mehrfachfluoreszenz). Zur Unterscheidung der von den einzelnen Farbstoffen ausgesendeten Fluoreszenzsignale werden wiederum spezielle dichroitische Strahlteiler verwendet.

Neben der Anregung der Farbstoffmoleküle mit einem hochenergetischen Photon (Einphotonen-Absorption) ist auch eine Anregung mit mehreren Photonen geringerer Energie möglich (Abb. 1 b). Die Summe der Energien der Einzelphotonen entspricht hierbei ungefähr der des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Abb. 1b zeigt eine Anregung mittels der simultanen Absorption von 2 Photonen im nahen infraroten Wellenlängenbereich. Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

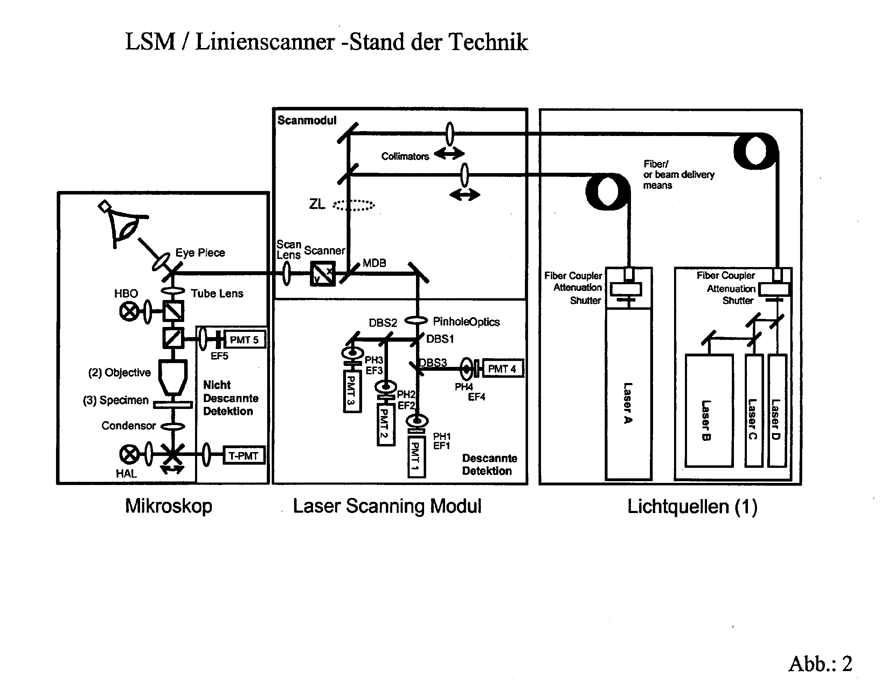

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle L, Scanmodul S, Detektionseinheit DE und Mikroskop M. Diese Module werden im folgenden näher beschrieben. Es wird zusätzlich auf DE19702753A1, US6167173 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul L erzeugt. Zum Einsatz kommen hierbei verschiedene Laser A-D (Argon, Argon Krypton, TiSa-Laser). Weiterhin erfolgt im Lichtquellenmodul L die Selektion der Wellenlängen und die Einstellung der Intensität der benötigten Anregungswellenlänge, z.B. durch den Einsatz eines akusto-optischen Modulators. Anschließend gelangt die Laserstrahlung über eine Faser oder eine geeignete Spiegelanordnung in das Scanmodul S . Die in der Lichtquelle L erzeugte Laserstrahlung wird mit Hilfe des Objektivs (2) beugungsbegrenzt über die Scanner, die Scan Lens und die Tubuslinse in das Präparat ((Probe 3) fokussiert. Der Fokus wird rasterförmig in x-y-Richtung über die Probe 3 bewegt. Die Pixelverweilzeiten beim Scannen über die Probe 3 liegen meist im Bereich von weniger als einer Mikrosekunde bis zu einigen Sekunden.

Bei einer konfokalen Detektion (descannte Detektion) des Fluoreszenzlichtes gelangt das Licht, das aus der Fokusebene (Probe 3 ) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht über dichroitische Strahlteiler DBS 1-3 und Pinholeoptiken auf eine Blende (konfokale Blende /Pinhole) (PH1,2,3,4) fokussiert, die sich genau in einer zur Fokusebene des Objektivs 2 konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF1-4) der nochmals die Anregungsstrahlung unterdrückt. Nach Passieren des Blockfilters wird das Fluoreszenzlicht mittels eines Punktdetektors (PMT1-4) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion über T-PMT , PMT 5 kann in Detektionsrichtung direkt nach dem Objektiv oder auf der dem Objektiv abgewandten Seite erfolgen (non descannte Detektion).

In einer weiteren Anordnung zur Detektion (nicht dargestellt) einer durch Mehrphotonenabsorption angeregten Farbstofffluoreszenz erfolgt weiterhin eine descannte Detektion, jedoch wird diesmal die Pupille des Objektives von der Pinholeoptik PH in die Detektionseinheit abgebildet (nichtkonfokal descannte Detektion).

Von einem dreidimensional ausgeleuchteten Bild wird durch die geschilderten Detektionsanordnungen in Verbindung mit der entsprechenden Einphotonen bzw. Mehrphotonen-Absorption nur die Ebene (optischer Schnitt) wiedergegeben, die mit der Fokusebene des Objektivs zusammenfällt. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

Statt eines Punktscanners werden nach dem Stand der Technik auch so genannte Linienscanner verwendet (Lit.: Corle, Kino; "Confocal Scanning Optical Microscopy and Related Imaging Systems"; Academic Press 1996). Der prinzipielle Aufbau entspricht im wesentlichen dem eines LSM nach Abb. 2. Jedoch wird statt eines Punktfokus eine Linie in die Probe (3) abgebildet und die zu untersuchende Probe nur noch in einer Richtung (x oder y) gescannt. Die Erzeugung des Linienfokus erfolgt mit Hilfe mindestens einer in Abb.2 gestrichelt dargestellten Zylinderlinse (ZL) im kollimierten Beleuchtungsstrahlengang in deren Brennweite sich eine Pupillenebene der Mikroskopanordnung befindet. Als konfokale Blende (PH) dient in einem solchen Aufbau eine Schlitzblende anstatt der Pinholes PH 1-4. Eine nichtdescannte Detektion bei Verwendung einer Mehrphotonen-Absorption kann auch mit dieser Anordnung erfolgen. Hierzu kann wiederum die konfokale Blende (PH) entfallen. Zur Detektion wird eine CCD- Kamera (nicht descannt) oder Zeile (descannt) mit 1024 oder mehr Bildpunkten anstatt des Punktdetektors (PMT) eingesetzt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit (Echtzeitmikroskopie) verwendet werden.

Nachteilig bei diesem Verfahren ist, dass die Tiefenauflösung durch die Schlitzblende um einen Faktor 1.4 schlechter ist im Vergleich zu punktscannenden Laser Scanning Mikroskopen. Dies kommt daher, dass die konfokale Schlitzblende nur Fluoreszenzlichtanteile außerhalb des konfokalen Schnittes senkrecht zur Scanlinie unterdrückt. Zusätzlich verschlechtert sich die laterale Auflösung.

In einer weiteren Anordnung zur Echtzeitmikroskopie nach dem Stand der Technik wird das komplette zu untersuchende Feld mittels einer aufgeweiteten Lichtquelle beleuchtet. Jedoch werden nur spezielle Punktmuster des gesamten zu scannenden Feldes durch eine sich schnell drehende Scheibe freigegeben. Diese Verfahren werden in der Literatur meist als Nipkow-Disk Verfahren bezeichnet (Lit.: Corle, Kino; "Confocal Scanning Optical Microscopy and Related Imaging Systems"; Academic Press 1996).

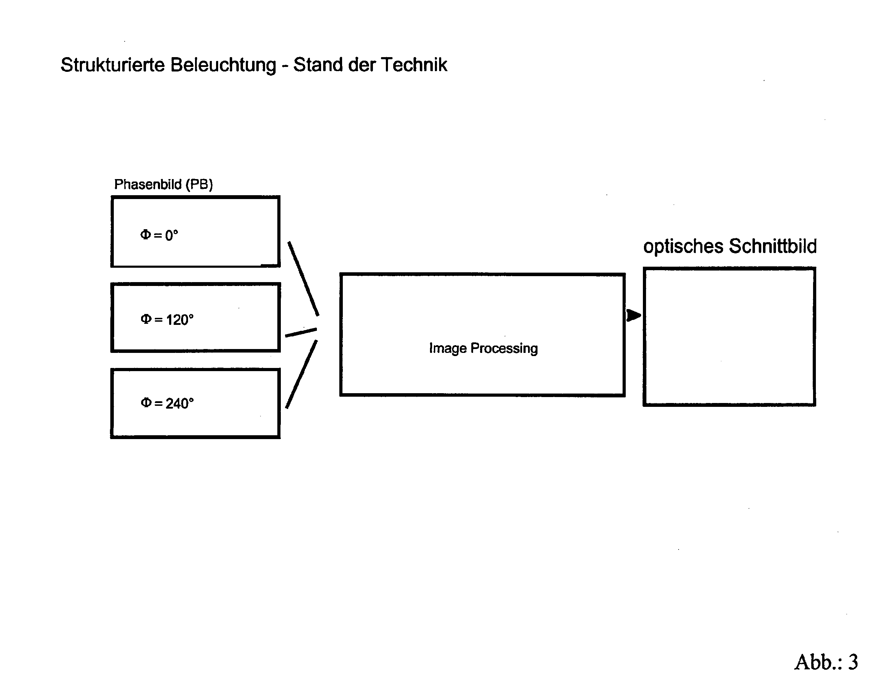

In einem weiteren Verfahren nach dem Stand der Technik, der sogenannten strukturierten Beleuchtung (siehe Abb. 3), nutzt man die Modulationstiefe der optischen Abbildung einer Amplitudenstruktur (z.B. Gitter) als Kriterium für die Tiefenschärfe. Das Bild der periodischen Struktur zeichnet sich durch die Frequenz der Modulation und die Phasestellung (Bildphase) der Modulation aus.

Durch eine Phasenverschiebung der Struktur senkrecht zur optischen Achse können unterschiedliche Projektionsszenarien erhalten werden.

Um streifenfreie, tiefendiskriminierte optische Schnitte berechnen zu können, werden im allgemeinen mindestens 3 Phasenbilder PB bei 0°, 120° und 240° benötigt. Diese Phasenbilder (PB) werden anschließend zu einem (konfokalen) optischen Schnittbild in einem Image Prozessor mit folgender Formel verrechnet:

$$I_{Section}(x) = Const \bullet \sqrt{(I(x,0°) - I(x,120°))^2 + (I(x,120°) - I(x,240°))^2 + (I(x,0°) - I(x,240°))^2} ,$$

wobei I(x, Winkel) die Intensität am jeweiligen Pixel in dem entsprechenden Phasenbild beschreibt.

Die Aufzeichnung der 3 oder mehr Phasenbilder erfolgt im einfachsten Falle sequentiell. Dabei wird davon ausgegangen, dass sich die Probe während der Messung der Bilder nicht bewegt. Die so aus den Phasenbildern berechneten Schnittbilder bzw. Schnittstapel können anschließend mittels 3-D Auswertesoftware auf einem Standard PC und Monitor dargestellt werden. Die Ortsauflösung entlang der optischen Achse hängt von der Wellenlänge des Lichtes, der numerischen Apertur des Objektivs und der Modulationsfrequenz ab.

Für eine detaillierte Beschreibung des Berechnungsalgorithmus wird auf T. Wilson et al.; "Method of obtaining optical sectioning by using structured light in a conventional microscope"; Optics Letters 22 (24) 1997 verwiesen.

Nachteilig bei bisherigen Verfahren zur Echtzeitmikroskopie ist weiterhin, dass bei einer simultanen Untersuchung von mehreren Farbstoffen auch mehrere Detektionseinrichtungen vorzusehen sind. Dadurch erhöhen sich die Anforderungen an die Datenübertragung und die Kosten für ein solches Gerät. Deshalb werden heutzutage nur Mikroskope zur sequentiellen Bildgebung der verschiedenen Farbstofffluoreszenzen eingesetzt. In DE 19829981 A1 wird ein Verfahren beschrieben, die Anregungswellenlänge und/oder Intensität während des Scanvorgangs zu ändern.

Aufgabe der Erfindung ist die Schaffung einer neuen Methode mit der Präparate in Echtzeit und mit einer hohen optischen Auflösung abgebildet werden können.

Die der Erfindung zugrunde liegende Aufgabe wird mit einem Verfahren zur tiefenaufgelösten Erfassung einer Probe mittels Mehrfachfluoreszenz gemäß Anspruch 1 gelöst.

Bevorzugte Weiterbildungen dieses Verfahrens sind in den Ansprüche 2 bis 14 angegeben.

Die Aufgabe der Erfindung wird mit einer Anordnung zur tiefenaufgelösten optischen Erfassung einer Probe mittels Mehrfachfluoreszenz gemäß Anspruch 15 gelöst.

Bevorzugte Weiterbildungen der erfindungsgemäßen Anordnung sind in den abhängigen Ansprüche 16 bis 34 angegeben.

Die Erfindung ist zum Einsatz in Applikationen, die Mehrfachfluoreszenzen erfordern, besonders geeignet, da diese simultan und vorteilhaft auch mit vergleichbarer optischer Auflösung wie bei einen punktscannenden LSM, jedoch in Echtzeit aufgezeichnet werden können.

Die Methode kann in bildgebenden Mikroskopiersystemen eingesetzt werden wie Laser Scanning Mikroskopen zur dreidimensionalen Untersuchung von biologischen Präparaten mit einer optischen, räumlichen Auflösung bis zu 200 nm und in analytischen Mikroskopiersystemen wie beispielsweise Fluoreszenzkorrelationsspektrometem eingesetzt werden.

Weiterhin sind auf Fluoreszenzdetektion basierende Verfahren zum Screenen von Farbstoffen wie z.B.in sogenannten Chipreadern eingeschlossen, die sich von den Verfahren der Laser Scanning Mikroskopie vor allem durch ein deutlich größeres Bildfeld unterscheiden.

## Beschreibung der Erfindung

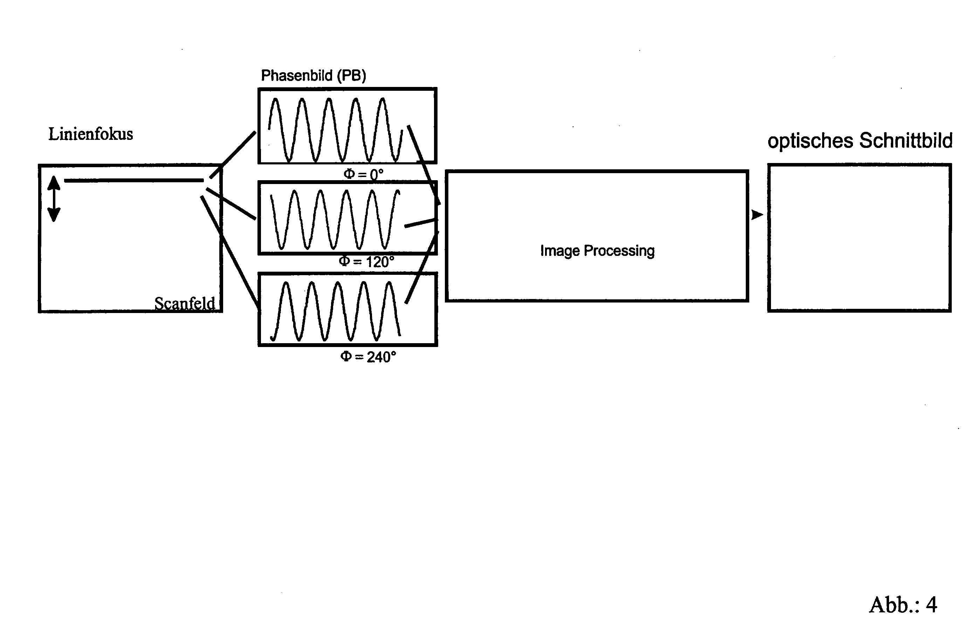

Gegenstand des Verfahrens zur Erhöhung der räumlichen Detektionsauflösung, vorzugsweise bei einem in Echtzeit bildgebenden Verfahren, ist eine linienförmige Anregung und Detektion der von einer Probe reflektierten, gestreuten und / oder transmittierten Anregungsstrahlung und /oder angeregten Fluoreszenz. Hierzu wird mittels geeigneter und weiter unten näher beschriebener Optiken ein Linienfokus der Anregungsstrahlung in der Probe erzeugt. Abb. 4 zeigt ein mögliches Meßablaufschema. Auf der linken Seite ist ein Scanfeld mit dem Linienfokus dargestellt. Der Linienfokus kann mit geeigneten Hilfsmitteln (Scannerspiegel in einer Richtung) entlang des eingezeichneten Pfeiles verschoben werden. Die Erhöhung der axialen und lateralen optische Auflösung erfolgt durch eine Strukturierung des Linienfokus. Die Strukturierung erfolgt durch Überlagerung der Scanlinie mit einer periodischen Struktur, erzeugt beispielsweise durch ein Sinusgitter im Strahlengang. Bei einer kohärenten Beleuchtung kann eine Erzeugung der Struktur auch durch eine Interferenz von 2 kohärenten Teilstrahlen in der Probe erzeugt werden (Lit.: Wilson WO98/45745). Es werden mindestens zwei Bilder mit unterschiedlicher Phasenlage der periodischen Struktur aufgenommen. Grundsätzlich kann der optische Schnitt auch durch die Aufnahme von Bildern mit unterschiedlicher Modulationsfrequenz der Struktur erfolgen.

Die Beleuchtung der Probe kann mit räumlich und zeitlich kohärenter oder inkohärenter Beleuchtung erfolgen. Es kann beispielsweise auch eine räumlich kohärente Laserlichtquelle durch die Verwendung einer Streuscheibe oder durch die Aneinanderreihung mehrerer Einzelfoki in der Probe für eine inkohärente Beleuchtung verwendet werden.

Es werden vorteilhaft mindestens 2 Phasenbilder PB mit Bildphasen von z.B. 0° und 180° bei Verwendung einer Anregungswellenlänge zur Berechnung eines optischen Schnittbildes im Image Prozessor benötigt.

Bei n Anregungswellenlängen sind n+1 Phasenbilder nötig.

Für eine Anregungswellenlänge hat das von der Probe emittierte Signal entlang einer Scanlinie folgende Gestalt:

$$I_{Sig}(x) = C(x) \cdot \cos(k \cdot x) + B(x)$$

wobei C(x) die eigentliche Objektinformation (z.B. die Konzentration und der Wirkungsquerschnitt des Farbstoffes oder der lokale Reflektionskoeffizient) an der Position x innerhalb des konfokalen optischen Schnittes und entlang des linienfokus für die Anregungswellenlänge trägt und die gesuchte Größe darstellt. B(x) trägt die Objektinformation von außerhalb des konfokalen Bereichs. B(x) ist nicht moduliert, da die Struktur außerhalb des konfokalen Bereiches nicht scharf abgebildet wird. k ist die inverse Modulationsfrequenz der strukturierten Anregung. Die obige Gleichung besitzt 2 Unbekannte C(x) und B(x). Zur Bestimmung von C(x) ist die Aufnahme von 2 Phasenbildern nötig. Die Phasenbilder seien mit $I_i(x)$; i=0, 1, ...n bezeichnet und durch eine relative Phasenverschiebung der Modulation von i·Δφ (Bildphasen) charakterisiert, wobei sich folgendes Gleichungssystem ergibt.

$$I_0(x) = C(x) \cdot \cos(k \cdot x) + B(x)$$

$$I_1(x) = C(x) \cdot \cos(k \cdot x + \Delta\varphi) + B(x)$$

Die gesuchte Objektinformation ergibt sich durch Auflösen des Gleichungssystems nach C wie folgt:

$$C(x) = \frac{I_1(x) - I_0(x)}{\cos(k \cdot x + \Delta\varphi) - \cos(k \cdot x)}$$

Analog kann zur Bestimmung von C(x) auch die Aufnahme von 2 Bildern mit verschiedener Modulationsfrequenz $k_0$ und $k_1$ erfolgen. Die Frequenzbilder seien wieder mit $I_i(x)$, i=0,1,...n bezeichnet, wodurch sich folgendes Gleichungssystem ergibt.

$$I_0(x) = C(x) \cdot \cos(k_0 \cdot x) + B(x)$$

$$I_1(x) = C(x) \cdot \cos(k_1 \cdot x) + B(x)$$

Die gesuchte Objektinformation ergibt sich durch Auflösen des Gleichungssystems nach C wie folgt:

$$C(x) = \frac{I_1(x) - I_0(x)}{\cos(k_1 \cdot x) - \cos(k_0 \cdot x)}$$

C(x) kann auch durch Aufnahme mindestens zweier Bilder mit verschiedener Phase und Frequenz der Modulation gewonnen werden.

Aus diesen linienbezogenen Objektinformationen wird ein optischer Schnitt in mindestens einer Probenebene zusammengesetzt und kann wie im Stand der Technik zu mindestens einem Bild mindestens eines Bildstapels weiterverarbeitet werden.

Wenn nur eine Anregungswellenlänge benutzt wird und mindestens 3 Phasenbilder (z.B. mit relativer Phasenlage von 0°, 120° und 240°) aufgezeichnet werden, kann auch der beim Stand der Technik erläuterte Algorithmus zur Gewinnung der Objektinformation (Lit.: T. Wilson et al.; "Method of obtaining optical sectioning by using structured light in a conventional microscope"; Optics Letters 22 (24) 1997) bei allen hier beschriebenen Anordnungen zur Anwendung gelangen.

Bei einer simultanen Anregung mit mehreren Wellenlängen erfolgt die anschließende Trennung der Signale der Probe durch eine spezielle Phasenkodierung oder Frequenzkodierung der Modulationsstruktur für die verschiedenen Anregungswellenlängen. Allgemein ergibt sich für n simultane Anregungswellenlängen die Anzahl der erforderlichen Phasenbilder zu n+1. Dabei werden verschiedene Anregungswellenlängen durch eine definierte wellenlängenspezifische Lageverschiebung der Modulation (Kodierphase) und / oder eine jeweils charakteristische Modulationsfrequenz (Kodierfrequenz) voneinander getrennt. Das von der Probe emittierte Licht (z.B. Fluoreszenz), welches durch eine Wechselwirkung des Anregungslichts der jeweiligen Wellenlänge mit der Probe entsteht, besitzt dann die spezifische Kodierphase und / oder Kodierfrequenz in Abhängigkeit von der Anregungswellenlänge und kann somit gemäß dem unten folgenden Algorithmus separiert werden.

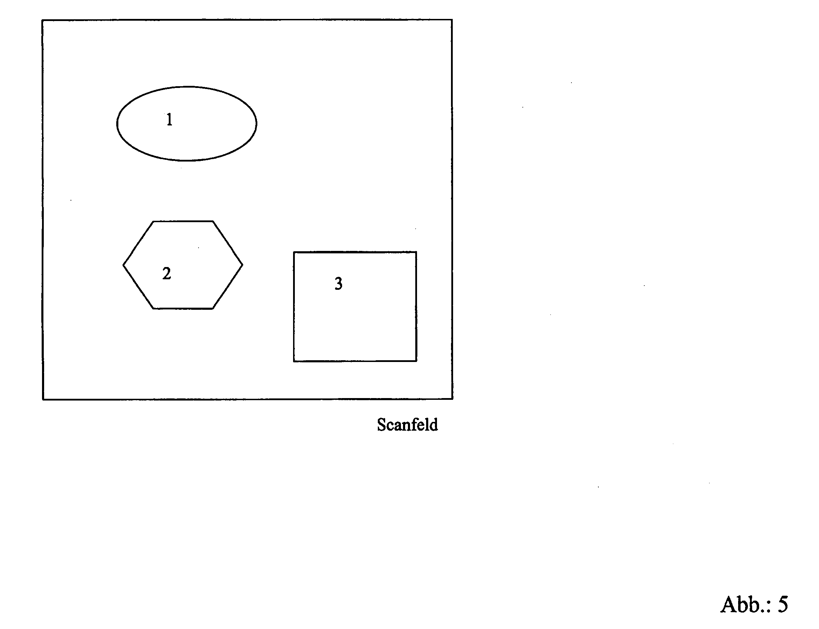

Wird also z.B. eine Probe, wie in Abb. 5 dargestellt, mit verschiedenen Farbstoffen (1,2,3) im Scanfeld gefärbt, die unterschiedliche Wellenlängen ($L_1$, $L_2$, $L_3$) zur Anregung einer Fluoreszenz benötigen, so überträgt sich die Kodier-

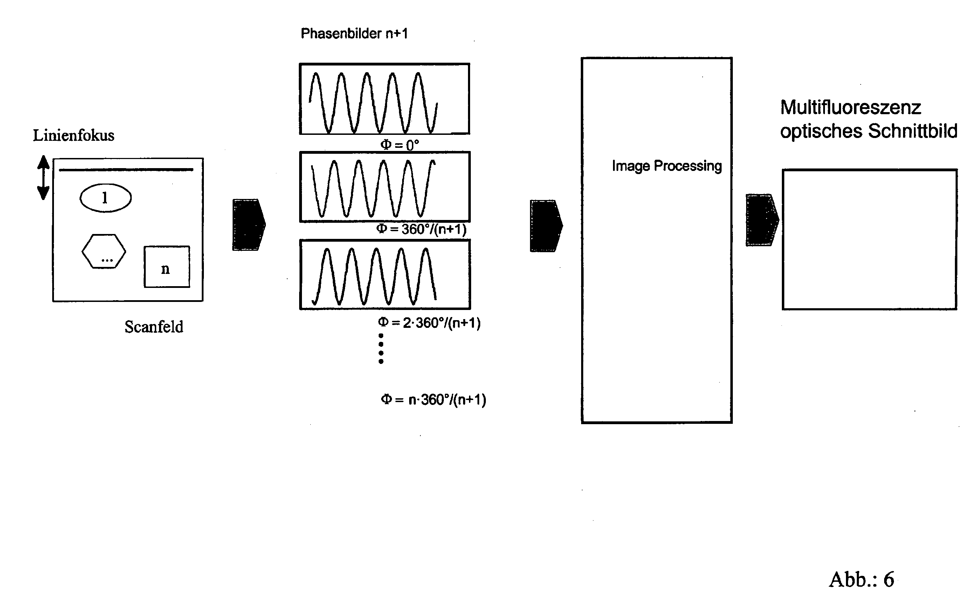

frequenz ($f_1$, $f_2$, $f_3$) und / oder die Kodierphasen ($\phi_1$, $\phi_2$, $\phi_3$) der Anregungsscanlinie auf die detektierte Fluoreszenz in der jeweiligen Region (1,...n), siehe Abbildung 6.

Im bevorzugten Fall besitzen alle Anregungswellenlängen die gleiche Kodierfrequenz, d.h. eine Modulationsfrequenz aber verschiedene Kodierphasen. Die folgende Diskussion sei auf diesen Fall mit Phasenkodierung beschränkt, wobei eine Kodierung mittels der Modulationsfrequenz analog zu behandeln und Gegenstand der Erfindung ist. Für zwei Anregungswellenlängen hat das von der Probe emittierte Signal entlang einer Scanlinie folgenden Gestalt:

$$I_{Sig}(x) = C_1(x) \cdot \cos(k \cdot x + \phi_1) + B_1(x) + C_2(x) \cdot \cos(k \cdot x + \phi_2) + B_2(x)$$

wobei $C_1(x)$ bzw. $C_2(x)$ die gesuchte Objektinformation (z.B. Konzentration und Wirkungsquerschnitt des Farbstoffes) an der Position x innerhalb des konfokalen optischen Schnittes und entlang des Linienfokus für die beiden Anregungswellenlängen darstellen. $B_1(x)$ bzw. $B_2(x)$ trägt die Objektinformation von außerhalb des konfokalen Bereichs. $B_1(x)$ bzw. $B_2(x)$ sind nicht moduliert, da die Struktur außerhalb des konfokalen Bereiches nicht scharf abgebildet wird. $\phi_1$ und $\phi_2$ sind die den jeweiligen Anregungswellenlängen zugeordneten Kodierphasen und k ist die inverse Modulationsfrequenz (die in diesem Beispiel für beide Anregungswellenlängen gleich ist) der strukturierten Anregung. Die obige Gleichung besitzt 4 Unbekannte $C_1(x)$, $B_1(x)$, $C_2(x)$ und $B_2(x)$.

Zur Bestimmung von $C_1(x)$ und $C_2(x)$ ist die Aufnahme von 3 Phasenbildern nötig. Die Phasenbilder seien mit $I_i(x)$, i=0,1,...n bezeichnet und durch eine relative Phasenverschiebung der Modulation von $i \cdot \Delta\varphi$ (Bildphasen) charakterisiert, wobei sich folgendes Gleichungssystem ergibt:

$$I_0(x) = C_1(x) \cdot \cos(k \cdot x + \phi_1) + B_1(x) + C_2(x) \cdot \cos(k \cdot x + \phi_2) + B_2(x)$$

$$I_1(x) = C_1(x) \cdot \cos(k \cdot x + \phi_1 + \Delta\varphi) + B_1(x) + C_2(x) \cdot \cos(k \cdot x + \phi_2 + \Delta\varphi) + B_2(x)$$

$$I_2(x) = C_1(x) \cdot \cos(k \cdot x + \phi_1 + 2 \cdot \Delta\varphi) + B_1(x) + C_2(x) \cdot \cos(k \cdot x + \phi_2 + 2 \cdot \Delta\varphi) + B_2(x)$$

Die gesuchte Objektinformation ergibt sich durch Auflösen des Gleichungssystems nach $C_1$ und $C_2$ wie folgt:

$$C_1(x) = [-c_{12}(x) \cdot (I_2(x) - I_0(x)) + c_{22}(x) \cdot (I_1(x) - I_0(x))] / \det(x)$$

$$C_2(x) = [c_{11}(x) \cdot (I_2(x) - I_0(x)) - c_{21}(x) \cdot (I_1(x) - I_0(x))] / \det(x)$$

mit $c_{ij}(x) = \cos(k \cdot x + \phi_j + i \cdot \Delta\varphi) - \cos(k \cdot x + \phi_j)$

und $\det(x) = c_{11}(x) \cdot c_{22}(x) - c_{12}(x) \cdot c_{21}(x)$. Die Gewinnung der Objektinformation setzt somit die Kenntnis der Kodierphasen ($\phi_i$) und der inversen Modulationsfrequenz (k) für die einzelnen Anregungswellenlängen voraus. Für die Lösung des Gleichungssystems und damit die Trennung der Objektinformationen, die durch die jeweilige Anregungswellenlänge sichtbar gemacht wurde, werden bei einer Zweifarbenanregung 3 Phasenbilder benötigt, wobei die Bildphasenverschiebung ($\Delta\varphi$) zwischen den einzelnen Bildern im einfachsten Falle 120° beträgt.

Die Objektinformation von außerhalb des konfokalen Bereichs kann nur für die Summe der Beiträge aller anregenden Wellenlängen gewonnen werden. Im vorliegenden Beispiel ist dieser Hintergrund

$$B_1(x) + B_2(x) = I_0(x) - C_1(x) \cdot \cos(k \cdot x + \phi_1) - C_2(x) \cdot \cos(k \cdot x + \phi_2)$$

welcher bei Kenntnis von $C_1$ und $C_2$ berechnet werden kann.

Die Erweiterung auf 3 Anregungswellenlängen ergibt sich äquivalent aus der Lösung des entsprechenden Gleichungssystems, wobei $C_3(x)$ bzw. $B_3(x)$ die Objektinformation angeregt durch die dritte Wellenlänge von innerhalb bzw. außerhalb des konfokalen Schnittes, darstellen soll. Die Objektinformationen für die einzelnen Wellenlängen ergeben sich wie folgt:

$$C_1 = [(c_{12} \cdot c_{23} - c_{13} \cdot c_{22}) \cdot (I_3 - I_0) + (c_{13} \cdot c_{32} - c_{12} \cdot c_{33}) \cdot (I_2 - I_0) + (c_{22} \cdot c_{33} - c_{23} \cdot c_{32}) \cdot (I_1 - I_0)] / \det$$

$$C_2 = [(c_{13} \cdot c_{21} - c_{11} \cdot c_{23}) \cdot (I_3 - I_0) + (c_{11} \cdot c_{33} - c_{13} \cdot c_{31}) \cdot (I_2 - I_0) + (c_{23} \cdot c_{31} - c_{21} \cdot c_{33}) \cdot (I_1 - I_0)] / \det$$

$$C_3 = [(c_{11} \cdot c_{22} - c_{12} \cdot c_{21}) \cdot (I_3 - I_0) + (c_{12} \cdot c_{31} - c_{11} \cdot c_{32}) \cdot (I_2 - I_0) + (c_{21} \cdot c_{32} - c_{22} \cdot c_{31}) \cdot (I_1 - I_0)] / \det$$

mit $\phi_3(x)$ als Kodierphase der Modulation bei der dritten Anregungswellenlänge und

$$\det(x) = c_{11} \cdot (c_{22} \cdot c_{33} - c_{23} \cdot c_{32}) + c_{12} \cdot (c_{23} \cdot c_{31} - c_{21} \cdot c_{33}) + c_{13} \cdot (c_{21} \cdot c_{32} - c_{22} \cdot c_{31}).$$

Bei einer 3 Farbenanregung ist die Aufnahme von 4 Phasenbildern zur Trennung der Objektinformation, angeregt durch die einzelnen Wellenlängen, notwendig. Die Bildphasenschrittweite kann beispielsweise 90 Grad betragen. Da die Größen $c_{ij}$ für eine Anordnung mit vorgegebenen Kodierphasen und Kodierfrequenzen konstant sind, ist die Gewinnung der Objektinformation durch Signalverarbeitung eine einfache Operation. Diese Operation läßt sich durch Transformation der normierten Bildsignale $\Delta I_i(x) = I_1(x) - I_0(x)$ mittels als Konstanten abgelegter Faktoren $f_k(x)$, die sich aus den $c_{ij}(x)$ ergeben, angeben. Für 3 Wellenlängen ergibt sich z.B. aus den obigen Gleichungen:

$$C_1 = f_1 \cdot \Delta I_3 + f_2 \cdot \Delta I_2 + f_3 \cdot \Delta I_1$$

$$C_2 = f_4 \cdot \Delta I_3 + f_5 \cdot \Delta I_2 + f_6 \cdot \Delta I_1.$$

$$C_3 = f_7 \cdot \Delta I_3 + f_8 \cdot \Delta I_2 + f_9 \cdot \Delta I_1$$

In Verallgemeinerung ist es für die simultane Anregung mit n Wellenlängen erforderlich, n+1 Bilder $I_0$ bis $I_n$ mit jeweils eigener Phase und / oder Frequenz der Anregungsmodulation aufzunehmen. Bei Phasenbildern (Bildphase: $\varphi_i$) mit Phasenkodierung der Anregungswellenlänge ($\phi_j$) ergeben sich folgende Bilder, die die mit der jeweiligen j-ten Wellenlänge angeregten Bildinformationen vom pseudokonfokalen Schnitt ($C_j$) und vom Hintergrund ($B_i$) enthalten.

$$I_0(x) = \sum_{j=1}^{n} C_j(x) \cdot \cos(k \cdot x + \phi_j + \varphi_0) + B_j(x)$$

$$I_1(x) = \sum_{j=1}^{n} C_j(x) \cdot \cos(k \cdot x + \phi_j + \varphi_1) + B_j(x)$$

$$I_2(x) = \sum_{j=1}^{n} C_j(x) \cdot \cos(k \cdot x + \phi_j + \varphi_2) + B_j(x)$$

...

$$I_n(x) = \sum_{j=1}^{n} C_j(x) \cdot \cos(k \cdot x + \phi_j + \varphi_n) + B_j(x)$$

Das sich daraus ergebende Gleichungssystem der Form:

$$\begin{pmatrix} c_{11} & c_{12} & \dots & \dots \\ c_{21} & c_{22} & \dots & \dots \\ \dots & \dots & \dots & \dots \\ c_{n1} & c_{n2} & \dots & c_{nn} \end{pmatrix} \cdot \begin{pmatrix} C_1 \\ C_2 \\ \dots \\ C_n \end{pmatrix} = \begin{pmatrix} I_1 - I_0 \\ I_2 - I_0 \\ \dots \\ I_n - I_0 \end{pmatrix}$$

mit $c_{ij}(x) = \cos(k \cdot x + \phi_j + \varphi_i) - \cos(k \cdot x + \phi_j)$

läßt sich mit bekannten mathematischen Methoden (z.B. laut Cramerscher Regel) nach den gesuchten Bildinformationen von innerhalb des pseudokonfokalen Schnitt, getrennt nach den einzelnen Anregungswellenlängen, auflösen.

Ferner läßt sich damit die von allen Wellenlängen angeregte Bildinformation von außerhalb des pseudokonfokalen Schnittes nach

$$\sum_{j=1}^{n} B_j(x) = I_0(x) - \sum_{j=1}^{n} C_j(x) \cdot \cos(k \cdot x + \phi_j + \varphi_0)$$

bestimmen.

Analoge Beziehungen gelten, wenn anstelle der Phase oder zusätzlich dazu die Frequenz zur Kodierung der verschiedenen Wellenlängen und / oder der Bilder verwendet wird. Die Koeffizienten $c_{ij}$ sind dann geeignet zu modifizieren.

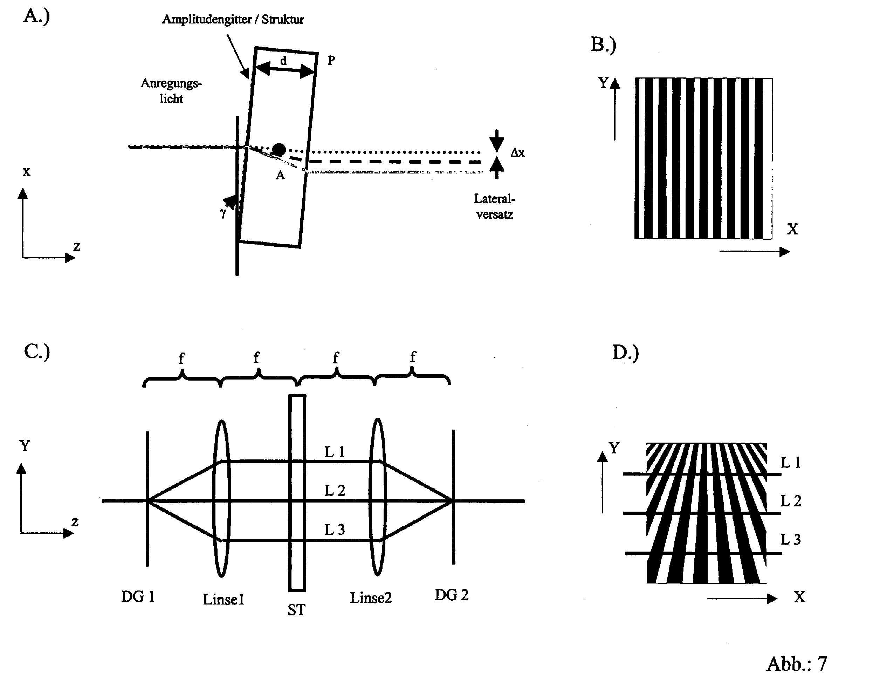

Die Bestimmung der Koeffizienten $c_{ij}$ kann mit dem im folgenden beschriebenen Meßverfahren unabhängig davon, ob die Phase und / oder die Modulationsfrequenz zur Bild- bzw. Wellenlängenkodierung eingesetzt werden, erfolgen. Für eine Referenzwellenlänge (beispielsweise 488nm) wird im Sinne einer Eichung die Kodierfrequenz und die Kodierphase ermittelt (z.B. mittels eines Testobjektes wie einer Glasplatte oder eines Spiegels). Hierzu wird die periodische Struktur auf das Testobjekt abgebildet, mit dem Detektor vermessen und die Kodierfrequenz sowie die Kodierphase für eine feste Bildphase am Ort der Probe vermessen und damit bestimmt. Die Kodierphasen bzw. Kodierfrequenzen der anderen Wellenlängen können nun relativ zu dieser Referenz wiederum für eine feste Bildphase vermessen werden. In einer möglichen Anordnung wird die Phasenkodierung durch Dispersion (Parallelversatz) in einer planparallelen Platte P, die zugleich den Träger eines in Beleuchtungsrichtung davor angeordneten Amplitudengitters (Struktur S) darstellt, realisiert, siehe Abb. 7A. Durch den Durchgang von polychromatischen Anregungslicht durch die hier schwach um die Achse A geneigte planparallele Platte P (Neigung: y, Dicke: d) ergibt sich ein geringfügiger, wellenlängenabhängiger Parallelversatz in der Ebene senkrecht zur Drehachse und zur optischen Achse :

$$\Delta x(\lambda) = d \cdot (\sin \gamma - \cos \gamma \cdot \tan \beta(\lambda)) \text{ mit } \beta(\lambda) = \sin^{-1}((\sin \gamma) / n(\lambda)).$$

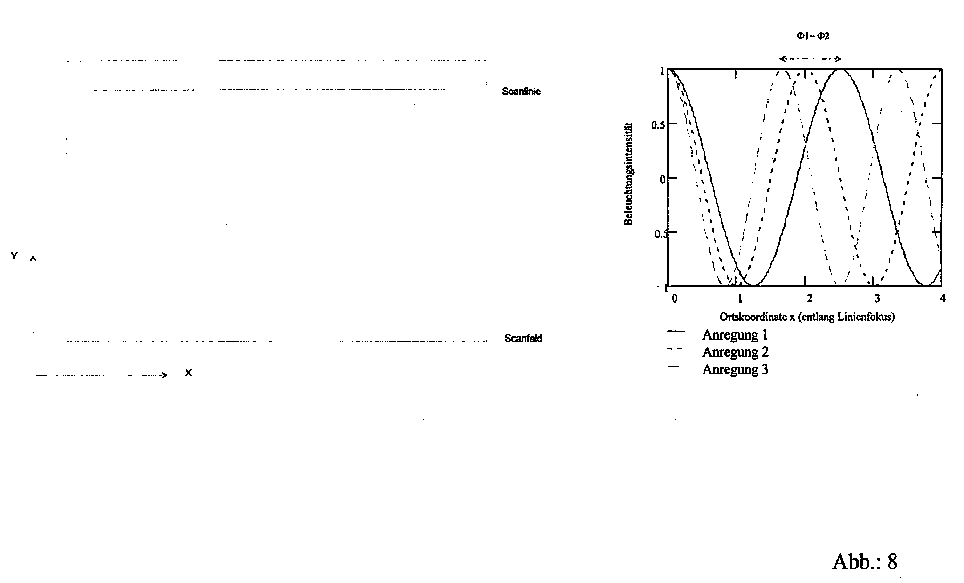

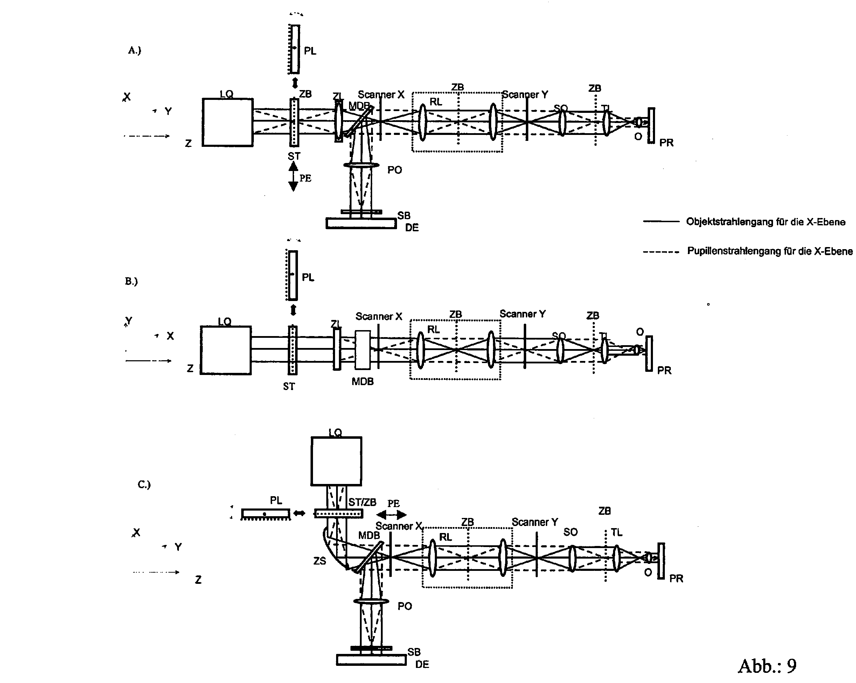

Wenn sich die Platte in einer Zwischenbildebene (siehe Abb. 9A) der Mikroskopanordnung befindet, äußert sich dieser Versatz als Phasenverschiebung zwischen den Amplitudenmodulationen der einzelnen Anregungslinienfoki. Abb. 8 zeigt schematisch einen Linienfokus in einem Scanfeld, wobei die Phasenlagen der Amplitudenmodulation für beispielsweise 3 verschiedene Anregungswellenlängen im Diagramm auf der rechten Seite dargestellt sind. Die x-Achse des Diagramms entspricht der Koordinate entlang des Linienfokus. In der rechten Abbildung der Abb. 8 ist nur ein Ausschnitt der Scanlinie zur Verdeutlichung der Kodierphasen dargestellt.

Eine Phasenverschiebung von 5 Grad ist ausreichend zur sicheren Trennung der von der entsprechenden Wellenlänge angeregten Signale. Tabelle 1 gibt die Kodierphasen für ein konkretes Beispiel an.

Tabelle 1: Phasenverschiebung für wichtige Laserlinien durch Dispersion in einer 10mm dicken BK7 Platte mit einem Amplitudengitter von 50 Linien/mm. Die Platte ist 5 Grad gegen die Normalen geneigt, so daß sich für die Referenzwellenlänge von 488 nm ein Parallelversatz von ca. 300 $\mu$m gegenüber der optischen Achse ergibt.

| Wellenlänge (nm) | Relativer Versatz ($\mu$m) | Phasenverschiebung Für 50 Linien/mm (Grad) |
|---|---|---|
| 458 | 1,08 | 19,5 |
| 476 | 0,36 | 6,5 |
| 488 | 0 | 0 |

(fortgesetzt)

| Wellenlänge (nm) | Relativer Versatz ($\mu$m) | Phasenverschiebung Für 50 Linien/mm (Grad) |
|---|---|---|
| 514 | -0,56 | -10,1 |
| 532 | -0,82 | -14,8 |
| 543 | -0,95 | -17,1 |
| 633 | -1,47 | -26,5 |
| 1064 | -2,75 | -49,5 |

Eine Anordnung zur wellenlängenabhängigen Phasenverschiebung (Phasenkodierung) verwendet ein optisches Gitter, welches in einer Pupillenebene der Mikroskopanordnung- beispielsweise im Scanner eingesetzt wird.

Im folgenden werden vorteilhafte Anordnungen beispielhaft für Fluoreszenz und DIC-Bildgebung erläutert, ohne dass die Übertragbarkeit auf weitere optische Kontrastverfahren beschränkt wird.

**Anordnung 1: Strukturierte Beleuchtung mit Einfachscanlinie**

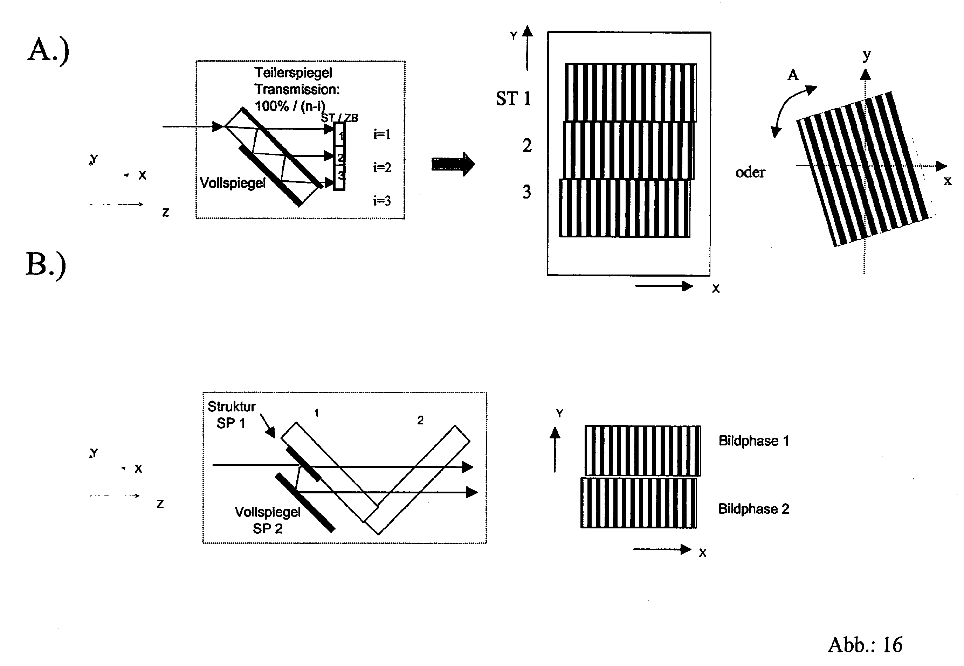

Eine erste Anordnung ist in Abb. 9 gezeigt. Gestrichelt eingezeichnet ist der Pupillenstrahlengang der Mikroskopanordnung. Durchgezogene Linien stellen den Objektstrahlengang dar. In Abb. 9A (xy-Ebene) wird Licht der Lichtquelle (LQ) mit beispielsweise einer Zylinderlinse (ZL), in deren Brennweite sich eine Pupillenebene der Mikroskopanordnung befindet, zu einem Linienfokus in einer Zwischenbildebene (ZB) geformt. In einer Zwischenbildebene vor oder hinter der Zylinderlinse (dargestellt vor der Zylinderlinse) befindet sich ein Element (ST), das entlang der Scanlinie eine Amplitudenmodulation hervorruft. ST ist beispielsweise ein Transmissionsgitter. Wie in Fig.7B/7D beispielhaft dargestellt, verläuft die Änderung der Periodizität senkrecht zur Richtung (Y) der als schwarze Striche schematisch dargestellten Gitterlinien in X-Richtung. Eine Verschiebung in dieser X- Richtung , beispielsweise mit der Positioniereinheit PE wie in den Abb. 9 dargestellt , ermöglicht eine Änderung der Phasenlage . Eine Verschiebung der Struktur nach Abb. 7D in Y-Richtung (Verschiebung nicht dargestellt) resultiert in einer Variation der Frequenz der Amplitudenmodulation zur Anpassung der optischen Schnittdicke (siehe Text weiter unten) oder zur Änderung der Modulationsfrequenz bei der Aufnahme der Einzelbilder zur Berechnung des optischen Schnittbildes. Eine Verkippung um einen Drehpunkt, der in der optischen Achse liegt und eine Drehachse in Y Richtung erzeugt ebenfalls diese Verschiebung. Eine Verdrehung des Gitters um eine Drehachse in Z - Richtung, die beispielsweise mit der optischen Achse übereinstimmt, erzeugt (s.a. Abb.16) ebenfalls eine Phasenverschiebung, die bei Abbildung mehrerer räumlich getrennter Linien auf die Probe ( Linienverlauf in X Richtung) unterschiedlich ausfällt.

Die strukturierte Scanlinie wird im folgenden über den Hauptstrahlteiler (MDB) und einen Scanner (y), der die Scanlinie senkrecht zur Linie bewegt (y-Koordinate) und sich wiederum in einer Pupille der Mikroskopanordnung befindet, durch die Scanoptik (SO), die Tubuslinse (TL) und das Objektiv (O) in die Probe (PR) abgebildet. Die Relayoptik (RL) bildet hierbei den Brennpunkt der Zylinderlinse (ZL) auf den Scanner (y) ab. Die Relayoptik kann in speziellen Anordnungen nach dem Stand der Technik auch weggelassen werden. Z.B. kann sie bei einer Verkürzung des Abstandes der beiden Scanner x und y oder beim Ersetzen der Scanner x und y durch einen kardanisch aufgehängten Einzelscanner entfallen. Die Zylinderlinse kann prinzipiell auch durch einen Zylinderspiegel ersetzt werden, dessen Brennpunkt auf dem Scanner (X) liegt. Der Zylinderspiegel wird unter 45° in der in Abb. 9C gezeichneten xz-Ebene angeordnet. In dieser Ebene besitzt der Spiegel auch seine fokussierende Wirkung. Weiterhin wird durch den Spiegel der Strahlweg zur Lichtquelle um 90° abgewinkelt. Dies ist in Abb. 9c schematisch dargestellt.

Das vom Objektiv (O) gesammelte Emissionslicht wird mit Hilfe beispielsweise des Hauptfarbteilers (MDB) vom Anregungslicht abgespalten. Im Anschluß wird das Licht der Probe mit Hilfe einer abbildenden Optik (PO) bei konfokaler Detektion durch eine Schlitzblende (SB) (Lage - Schlitz Längsrichtung in Z Richtung auf der Zeichnung) fokussiert, wodurch Fluoreszenz, die außerhalb des Fokus entstand, unterdrückt wird. Bei einer nichtdescannten Detektion kann die Blende entfallen. Hinter der Schlitzblende befindet sich ein Zeilen- oder Flächendetektor (DE) (Lage der Zeile in Z-Richtung) der ortsaufgelöst (entlang des Linienfokus) die Fluoreszenz detektiert. Zusätzlich kann ein Emissionsfilter (nicht dargestellt) zur Unterdrückung der Anregungsstrahlung im Detektionsstrahlengang nach dem Hauptfarbteiler (MDB) angeordnet werden. Der Linienfokus wird mit dem Galvoscanner (y) in einer Raumrichtung abgerastert. Falls der x-Scanner nicht zur Einstellung der Bildphase verwendet wird, dann verbleibt er in seiner Nulllage.

Abb. 9B zeigt die gleiche Anordnung jedoch diesmal um 90 Grad gespiegelt (YZ-Ebene). Statt einer Linie auf der Probe ist in dieser Raumrichtung aufgrund der in dieser Richtung nicht wirkenden Zylinderlinse (ZL) ein Fokuspunkt auf der Probe zu sehen.

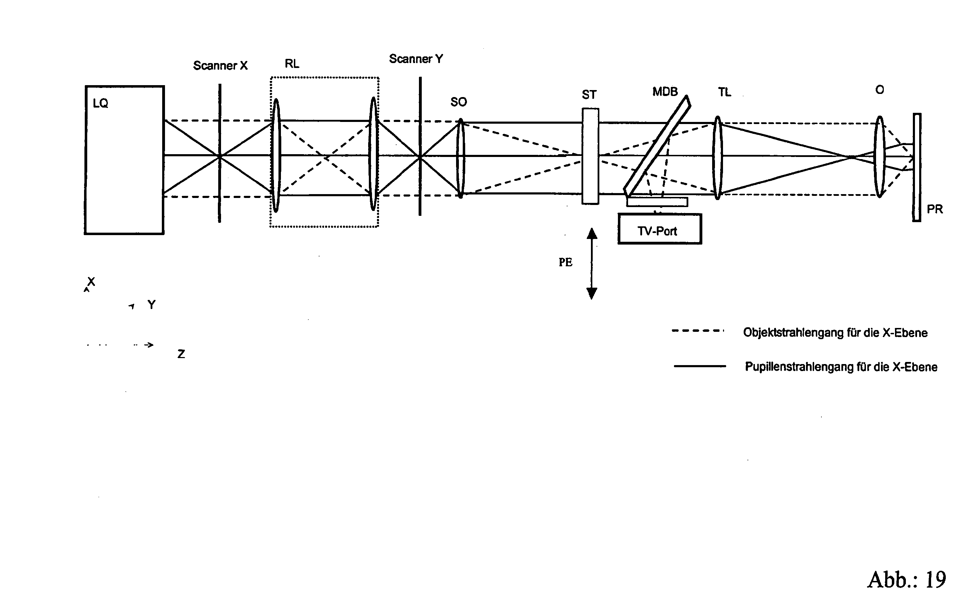

Prinzipiell kann auch auf den Einsatz der Schlitzblende verzichtet werden. Dies ist vor allem dann sinnvoll, wenn die Abbildung der Fluoreszenz nicht über die Scanner descannt wird sondern direkt auf eine CCD-Kamera oder eine gegatete Kamera zur ortsaufgelösten Messung der Fluoreszenzlebensdauer (LaVision, Picostar) erfolgen soll. Die CCD-Kamera betrachtet hierbei eine Zwischenbildebene ZB z.B. in der Zwischenbildebene zwischen TL und SO der Mikroskopanordnung. An einem Mikroskop nach dem Stand der Technik wird sie an einen TV-Port (Abb. 19 Lage TV-Port) angeschlossen. Zusätzlich kann eine CCD-Kamera im Transmissionsstrahlengang der Mikroskopanordnung (z.B. Abb. 1 statt T-PMT) eingesetzt werden. Dadurch kann die von die Probe transmittierte Anregungsstrahlung mit konfokaler Auflösung detektiert werden. Zusätzlich wird auch eine konfokale DIC-Abbildung möglich. Das DIC Prisma wird hierzu nach dem Stand der Technik in der Objektivpupille zwischen TL und Objektiv O angebracht. Das mit DIC so gewonnene Bild kann weiterhin mit den Bildern, die durch von der Probe reflektierte, gestreute und/oder emittierte Signale erzeugt wurden, in einem Bild überlagert dargestellt werden. Die Berechnung des konfokalen Schnittes erfolgt beispielsweise durch die Aufnahme von mindestens 2 Phasenbildern (siehe Abb. 4, oder im Text weiter oben). Die Beleuchtungsintensität der Linien in den mindestens 2 Phasenbildern variiert dazu in x-Richtung periodisch - beispielsweise sinusförmig - aufgrund der Struktur ST. Die relative Bildphase bei Verwendung von 3 strukturierten Linien ist um jeweils 120° Phasen verschoben. Die 3 Phasenbilder werden sequentiell erzeugt, d.h. es werden nacheinander 3 Bilder mit Hilfe des y-Galvoscanners (y) gescannt. Die Struktur (ST) kann beispielsweise ein Transmissionsgitter sein. Die Verschiebung der Bildphase kann beispielsweise mit einer Positioniereinheit (PE), an die das Transmissionsgitter gekoppelt ist, erfolgen, so dass jeder Ort der zu untersuchenden Probe mit variierender Helligkeit betrachtet werden kann. Die Einstellung der Bildphase kann weiterhin bei einer Wellenlänge mit Hilfe einer drehbar gelagerten Platte (PL) wie in Abb.7A erfolgen, der die Struktur vorgeordnet / aufgeprägt ist. Die Platte ist hierzu in einer Zwischenbildebene der Mikroskopanordnung anzuordnen wie in Abb. 9 dargestellt.

Die hierbei verwendete planparallele Platte befindet sich in einer Zwischenbildebene, vorzugsweise wird die Struktur ST (dargestellt in Abb.7B) direkt auf die Platte aufgebracht.

In einer weiteren Anordnung kann die Einstellung der Bildphase auch mit Hilfe eines weiteren Galvoscanners (X) erfolgen. Der Scanner (X) verstellt hierbei die Bildphase, indem er die Scanlinie in x-Richtung verschiebt. Dies hat den Vorteil, dass durch das Zuschalten (Einschwenken oder Einschieben) der Zylinderlinse (ZL) und des Transmissionsgitters gekoppelt mit einer detektionsseitigen Strahlumlenkung zur Umschaltung von einem Punktdetektor auf einen Zeilendetektor (DE) zwischen einem punktscannenden LSM und einem linienscannenden LSM mit strukturierter Beleuchtung umgeschaltet werden kann. Falls der Scanner X nicht zur Einstellung der Bildphase verwendet wird, so verbleibt er in seiner Nullstellung (ist also stromlos geschaltet).

## Anordnung 2: Strukturierte Beleuchtung mit Einfachscanline und Kodierung der Modulationsphase bzw. Modulationsfrequenz

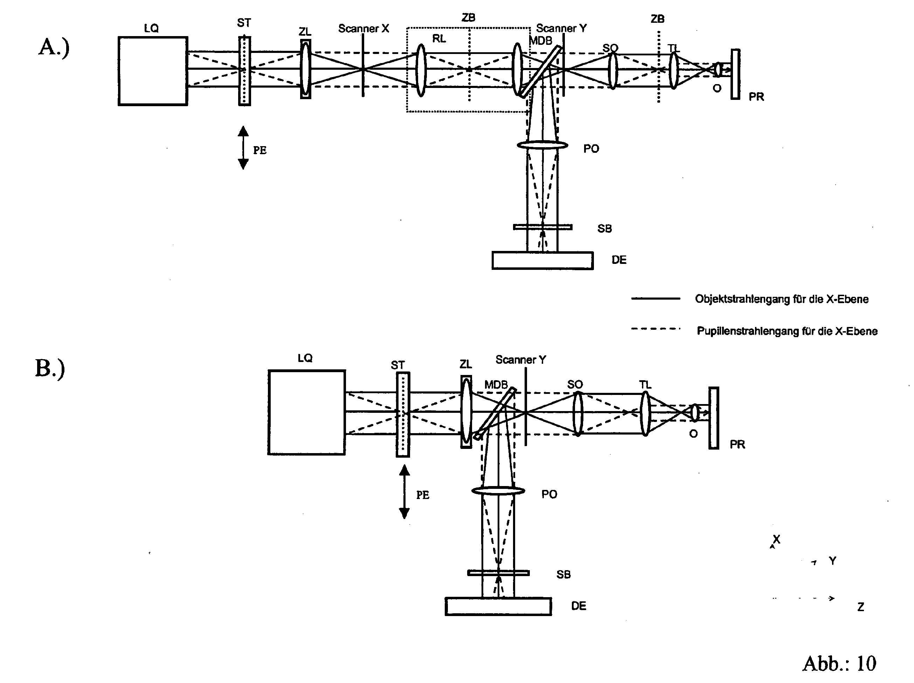

Eine zweite Anordnung verwendet verschiedene Kodierphasen in Abhängigkeit von der verwendeten Anregungswellenlänge bei der Strukturierung der Scanlinie. Dadurch können die Signale der von den einzelnen Wellenlängen angeregten Fluoreszenz digital separiert werden. Abb. 10A zeigt einen möglichen schematischen Aufbau in der XZ-Ebene. Licht der Lichtquelle(LQ) der verschiedenen Wellenlängen erfährt mit Hilfe einer Struktur (ST) eine Amplitudenmodulation. Die Struktur befindet sich hierzu in einer Zwischenbildebene der Mikroskopanordnung. Die Struktur ist über eine Positioniereinheit (PE) verschiebbar angeordnet, so dass die Struktur entlang der Scanlinie verschoben und verschiedene Bildphasen eingestellt werden können. Anschließend wird das strukturierte Licht in einer Zylinderoptik (ZL) zu einer Linie in der Pupillenebene der Mikroskopanordnung geformt. Dazu wird die Zylinderlinse (ZL) im Abstand ihrer Brennweite von der Pupille (Scanner X) angeordnet. Die Einstellung der Bildphase kann weiterhin mit dem Scanner (X) erfolgen, der sich in einer Pupillenebene der Mikroskopanordnung befindet.

Abb. 10B zeigt eine vereinfachte Anordnung mit nur einem Scanner (Y) in der XZ-Ebene. Die Einstellung der Bildphase erfolgt hierbei durch die Positioniereinheit PE.

Nachdem der Scanlinie eine Amplitudenmodulation aufgeprägt wurde, gelangt die Strahlung durch ein Element in dem die Struktur wellenlängenabhängig (ST) verschoben und damit die Kodierphase wellenlängenabhängig variiert wird. Eine mögliche Anordnung zur Phasenkodierung wurde bereits anhand von Abb. 7A beschrieben. Die hierbei verwendete planparallele Platte befindet sich in einer Zwischenbildebene, vorzugsweise wird die periodische Struktur ST (dargestellt unter anderem in Abb. 7B) direkt auf die Platte aufgebracht. Im Anschluß an die Phasen- bzw. Frequenzkodierung der Amplitudenmodulation gelangt die Anregungsstrahlung über den Hauptfarbteiler (MDB), den Y-Scanner, die Scanoptik (SO), die Tubuslinse (TL) und das Objektiv (O) in die Probe (PR). Der Y-Scanner rastert die Scanlinie zur Aufnahme eines Phasenbildes in der y-Koordinate ab. In Abhängigkeit von den verwendeten Farbstoffen erfolgt die Fluoreszenzanregung mit den entsprechenden Wellenlängen. Die Modulationsfrequenz und Modulationsphase der Scanlinie in Abhängigkeit von der Anregungswellenlänge überträgt sich auf diese Art auf das Fluoreszenzsignal. Bei einer descannten Detektion werden die Fluoreszenzen vom Objektiv gesammelt und gelangen über die Tubuslinse, Scanoptik und den Y-Scanner zum Hauptfarbteiler (MDB). Dieser trennt die Fluoreszenz von der Anregungsstrahlung. Im Anschluß wird die Fluoreszenz durch eine Schlitzblende auf einen Zeilendetektor (DE) abgebildet. Zur Unterdrückung der Anregungsstrahlung können zusätzlich Blockfilter vor den Zeilendetektor geschalten werden. Die Schlitzblende kann insbesondere bei einer Mehrphotonenanregung entfallen. Die Trennung der einzelnen Signalanteile, die von den verschiedenen Wellenlängen generiert wurden, und die Berechnung der optischen Schnitte erfolgt anhand des oben beschriebenen Algorithmus beispielsweise unter Verwendung der Kodierphasen bei gleicher Modulationsfrequenz, wobei die Kodierphasen der einzelnen Wellenlängen mit Testobjekten wie Planspiegeln vorher bestimmt worden sind. Es können somit Regionen die mit verschiedenen Farbstoffen gefärbt wurden, getrennt sichtbar gemacht werden.

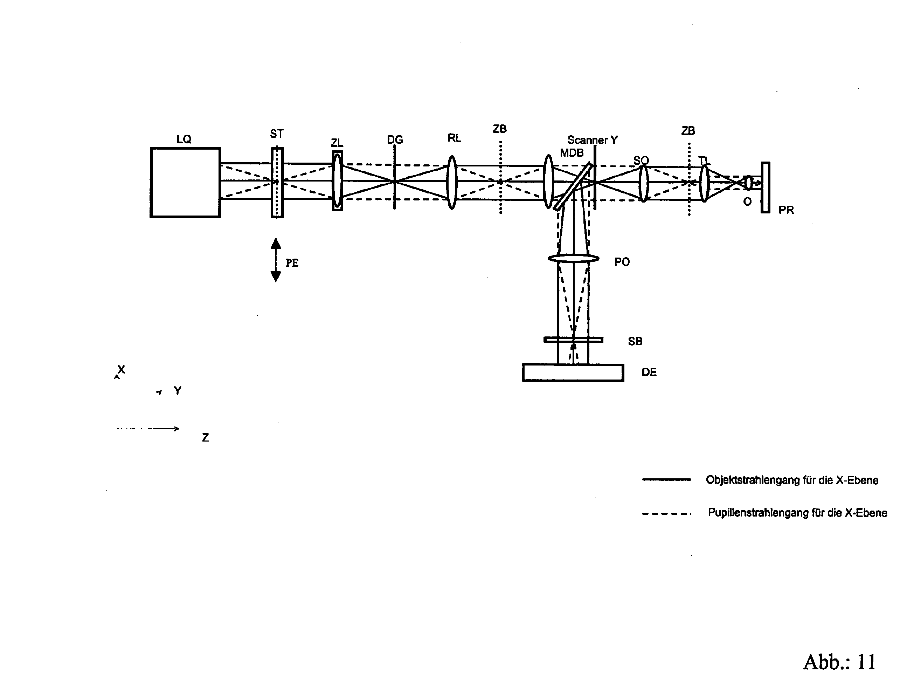

Eine weitere Anordnung verwendet ein dispersives Element (DG), z.B. ein Transmissionsgitter, das sich in einer Pupillenebene der Mikroskopanordnung befindet. Das Optikschema ist in Abb. 11 in der XZ-Ebene dargestellt. Das Transmissionsgitter verschiebt die einzelnen Scanlinien entsprechend ihrer Wellenlänge innerhalb der Zeichenebene (nur eine WL dargestellt). Dadurch wird den einzelnen Scanlinien entsprechend ihrer Wellenlänge eine unterschiedliche Phasenlage der Modulationsstruktur ST (Kodierphase) aufgeprägt. Die Verschiebung der Bildphase erfolgt mit Hilfe der Positioniereinheit (PE) und der Modulationsstruktur S für jede Wellenlänge mit einer identischen Schrittweite. Dadurch wird sichergestellt, dass die Bildphasenverschiebung für jede Anregungswellenlänge beispielsweise bei einer Aufnahme von 3 Phasenbildern 120° beträgt.

Im folgenden wird auf vorteilhafte Anordnungen zur Erzeugung der Frequenzkodierung bzw. der Anpassung der optischen Auflösung näher eingegangen.

Durch Verändern der Modulationsfrequenz für jede Anregungswellenlänge kann die effektive Pinholegröße, d.h. die optische Schnittdicke für die einzelnen Wellenlängen angepaßt werden.

Abb. 7C zeigt schematisch eine Vorrichtung zur wellenlängenabhängigen Einstellung der Modulationsfrequenzen, die vorteilhaft in den Anordnungen 1 und 2 (wie zum Beispiel in Abb.9) in eine Zwischenbildebene der Mikroskopeinrichtung anstelle der Struktur ST eingebaut wird. Dabei wird eine polychromatische Lichtquelle mit einem dispersiven Element (DG1) in seine spektralen Anteile räumlich aufgespalten. Im Anschluß werden die spektralen Anteile mit einer ersten Linse (Linse 1, Brennweite f) axparallel gemacht, d.h. DG1 steht im Brennpunkt der Linse. In der abbildungsseitigen Brennebene der Linse befindet sich die Struktur (ST) mit der die Amplitudenmodulation erfolgt. Eine mögliche Ausbildung der Struktur mit linearer Abhängigkeit der Frequenz in y-Richtung ist in Abb. 7D schematisch dargestellt.

Die gemäß 7C) erfolgte Aufspaltung in Linien L1,L2, L3 erzeugt auf dieser periodischen Struktur durch die unterschiedliche Lage der Linien in y-Richtung unterschiedliche Modulationsfrequenzen.

Erfolgt also eine von der Wellenlänge linear abhängige räumliche Aufspaltung der polychromatischen Lichtquelle, z.B. mit einem Transmissionsgitter, so ändern sich bei geeigneter Gitterauslegung auch die Modulationsfrequenzen der einzelnen spektralen Anteile in Abhängigkeit von der Wellenlänge Dadurch kann z.B. sichergestellt werden, daß die gleiche optische Schnittdicke bei verschiedenen Wellenlängen realisiert wird. Im Anschluß werden die einzelnen spektralen Anteile mit Hilfe einer zweiten Linse (Linse 2, Brennweite f, die nicht identisch der Brennweite der Linse 1 sein muß) und einem weiteren dispersiven Element (DG2, z.B. Transmissionsgitter, das nicht identisch DG1 sein muß) wieder räumlich überlagert. Durch die Anpassung der Brennweiten der Linsen 1 und 2 kann die Strahlaufweitung kontrolliert und damit die Ausleuchtung des Mikroskopobjektivs optimiert werden. Insgesamt ergeben sich mit einer solchen Struktur folgende vorteilhafte Varianten der Erfindung:

a) Durch eine Verschiebung in x-Richtung der Struktur ST kann für die einzelnen Linien eine (nach vorheriger Kalibriermessung) definierte unterschiedliche Phasenänderung erzeugt werden, wobei bei den unterschiedlichen Phasenlagen jeweils eine vollständige Abtastung der Probe mittels der jeweiligen Linie erfolgt und welllenlängenabhängige Schnittbilder berechnet werden.
Die Schnittdicke kann durch definierte Verschiebung der Frequenz über Verschiebung in y-Richtung verändert werden.
b) Durch (mindestens eine) Verschiebung in y-Richtung wird die Modulationsfrequenz definiert verändert und dadurch können durch mehrmaliges Abscannen bei unterschiedlichen Modulationsfrequenzen für die einzelnen Wellenlängen Schnittbilder berechnet werden.
Über die unterschiedlichen Modulationsfrequenzen der Struktur kann weiterhin eine Frequenzkodierung / Phasenkodierung für unterschiedliche Wellenlängen bei Abbildung aller Wellenlängen auf einer gemeinsamen Zeile erzeugt werden (siehe Anordnung 4).

Statt der in Abb. 7D gezeigten Struktur mit kontinuierlicher Änderung der Modulationsfrequenz in y-Richtung kann eine Struktur (s.a. Abb.16), die sich aus mehreren Teilstrukturen verschiedener Modulationsfrequenz zusammensetzt, verwendet werden. Dies hat jedoch den Nachteil, dass die Struktur nur für feste Anregungswellenlängen abgeglichen ist. Im einfachsten Falle können jedoch auch verschiedene Gitter ST mit jeweils verschiedener Modulationsfrequenz in die Anordnungen 1 und 2 eingeschwenkt werden.

In einer weiteren nicht gezeigten Anordnung passiert die Strahlung nach der Strukturierung ein Element, in dem die Struktur wellenlängenabhängig vergrößert und damit die Modulationsfrequenz wellenlängenabhängig variiert, d.h. eine Frequenzkodierung durchgeführt wird. In einer ersten Anordnung wird die Scanlinie mittels dichroitischen Strahlteilern in ihre einzelnen Wellenlängenanteile zerlegt und im Anschluß in den Teilstrahlengängen eine wellenlängenabhängige Vergrößerung mit jeweils einem Teleskop mit Zoomoptik zur Einstellung der Vergrößerung aufgeprägt. Mit Hilfe weiterer Dichroiten werden die einzelnen Scanlinien wieder überlagert. Als Alternative können in einer weiteren Anordnung auch spezielle diffraktive Elemente, die eine wellenlängenabhängige Vergrößerung der Scanlinie generieren, verwendet werden.

Am Ausgang besitzt die Scanlinie in Abhängigkeit von der verwendeten Wellenlänge eine spezifische Kodierfrequenz der Amplitudenmodulation. Die Verschiebung der Bildphase erfolgt mit Hilfe der Positioniereinheit (PE) und der verschieblichen Struktur ST für jede Wellenlänge mit einer identischen Schrittweite. Dadurch wird sichergestellt, dass die Bildphasenverschiebung für jede Anregungswellenlänge beispielsweise bei einer Aufnahme von 3 Phasenbildern 120° beträgt. Statt der Aufnahme von Phasenbildern kann der optische Schnitt auch aus 2 Bildern berechnet werden, bei denen die Modulationsfrequenz pro Anregungslinie in den beiden Bilder verschieden ist. Die Änderung der Modulationsfrequenz für alle oder eine Wellenlänge kann vorteilhaft durch die Aufnahme der beiden Bilder bei verschiedenen Stellungen in y-Richtung des Transmissionsgitters nach Abb. 7D erfolgen.

Es kann durch die oben beschriebenen Anordnungen z.B. sichergestellt werden, dass die axiale optische Auflösung des Mikroskops für verschiedene Wellenlängen gleich ist. Dadurch werden sogenannte Kolokalisationsmessungen mit einem Linienscanner möglich. Zusätzlich kann z.B. bei sehr schwachen Fluoreszenzsignalen das effektive Pinhole durch Verschiebung der Struktur in Y-Richtung siehe Abb. 7D, hier nach unten , vergrößert werden. Dadurch verringert sich zwar die optische Auflösung, jedoch kann das Signal- zu Rauschverhältnis verbessert werden.

Zusätzlich kann die oben beschriebene nicht dargestellte Zoomoptik dazu dienen, den chromatischen Längsfehler der abbildenden Optik zu kompensieren und damit sicher zu stellen, daß der optische Schnitt in der jeweils gleichen Objektebene erfolgt. Dazu wird jeweils eine Linse der einzelnen Zoomoptiken leicht in Abhängigkeit vom verwendeten Mikroskopobjektiv dejustiert, so dass der Strahl für die einzelnen Wellenlängen am Ausgang der Zoomoptik divergent oder konvergent auf die Objektivpupille trifft und dadurch der Fokus in Abhängigkeit von der Anregungswellenlänge in axialer Richtung verschoben, d.h. für alle Anregungswellenlängen zur Deckung gebracht werden kann.

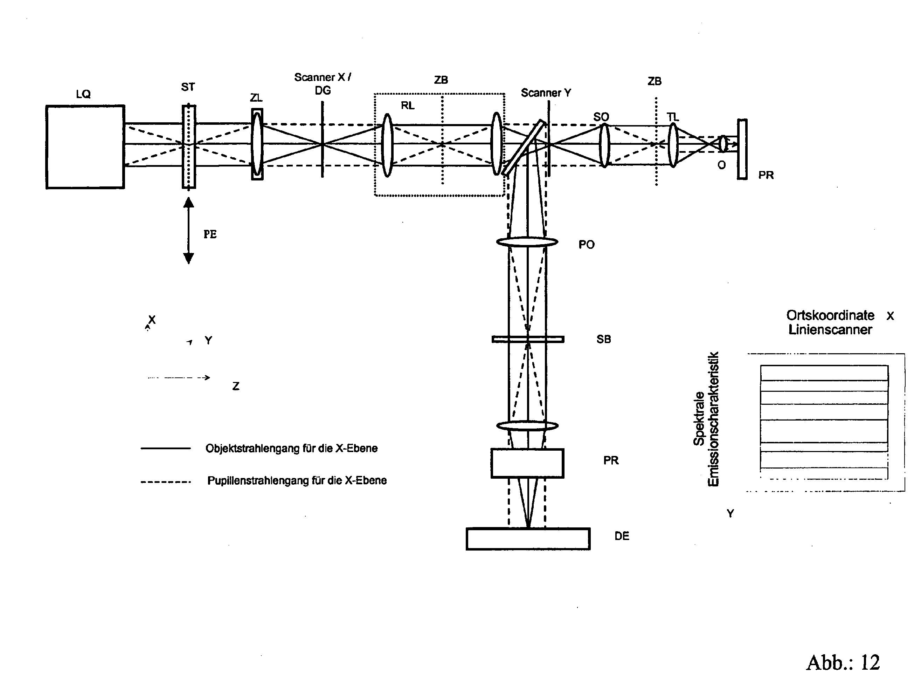

Zusätzlich zu Ausführung 1 und 2 kann ein weiteres dispersives Element (PR) der zusätzlichen spektralen Aufspaltung der Fluoreszenzsignale senkrecht zur Beleuchtungslinie dienen (multispektraler Linienscanner). Abb. 12 zeigt das Detektionsschema einer CCD Fläche des multispektralen Linienscanners in der XZ-Ebene. In der x-Richtung des Detektors (DE) werden die strukturierten Emissionssignale für die jeweiligen Wellenlängen abgebildet.

Alternativ zur Verschiebung der Phasenlage mittels PE kann die Einstellung der Bildphase auch hier durch den X - Scanner erfolgen.

Für jede Scanstellung der Scanlinie erfolgt die Aufnahme eines Bildes wie dargestellt für unterschiedliche Wellenlängen der Detektion. Die frei programmierbare Ansteuerung ausgewählter Detektorelemente (Zeilen) und die Kombination von Detektorelementen einer Spalte der Detektormatrix erlaubt eine flexible Auswahl von Spektralbereichen der FluoreszenzEmission. Hierzu können mehrere Zeilen des Detektors, in die verschiedene Fluoreszenzsignale entsprechend ihrer Wellenlänge abgebildet werden, elektronisch zusammengeschalten werden. Die multispektrale Detektion der Fluoreszenzemission kann wiederum mit der strukturierten Beleuchtung kombiniert werden. Dazu wird die linienförmige Anregung zusätzlich z.B. mittels eines Transmissionsgitters (ST) strukturiert. Hierbei erfolgt ein kompletter Scanvorgang der Scanlinie unter Detektion jeweils der Wellenlängenverteilung entsprechend der Abbildung in Fig.12 und weitere Scanvorgänge unter Änderung der Bildphase der Gitterstruktur. Da zur Ermittlung eines wellenlängenabhängigen Versatzes beispielsweise eine verwendete Planplatte PL definiert verkippt wurde, kann die Änderung der Phasenlage beispielsweise durch Verschiebung mit PE bei konstantem Kippwinkel erfolgen. Durch sequentielle Detektion von Bildern strukturierter Objekte mit unterschiedlichen Bildphasen der Anregung und nachfolgender Berechnung kann wieder der Tiefenkontrast optimiert werden. Abb. 12 zeigt die Kombination eines multispektralen Linienscanners (spektrale Aufspaltung erfolgt in der y-Ebene also in die Zeichenebene hinein) mit strukturierter Beleuchtung über die Struktur ST , wobei die Phasenkodierung wiederum mit einer verkippten und in senkrecht zur optischen Achse verschobenen planparallelen Platte (hier nicht dargestellt) oder mit einem dispersiven Element (siehe Text oben) erfolgt. Die Bildphase wird sequentiell variiert. Die unterschiedlichen spektralen Anteile werden parallel mittels CCD-Array detektiert.

Die Schlitzblende (SB), die hier als Eintrittsspalt der spektralen Aufspaltung dient, kann bei descannter Detektion im Linienscanner entfallen. Dadurch verringert sich zwar die spektrale Auflösung, jedoch wird der technische Aufwand erheblich erleichtert, da sonst verschiebbare Einzelschlitzblenden verwendet werden müssen.

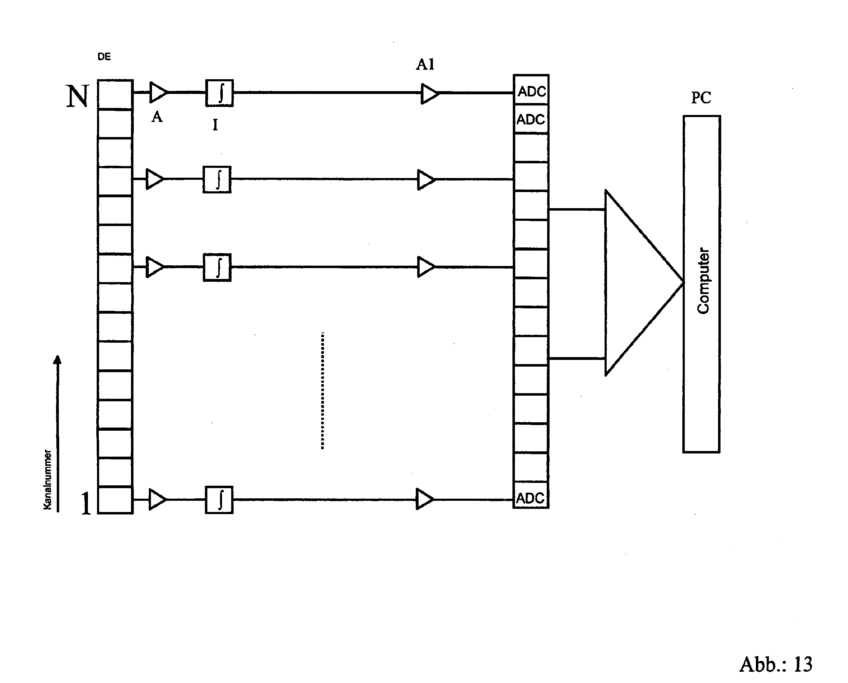

Abb. 13 zeigt schematisch den Aufbau der Elektronik zur Detektion der Signale mit einem Zeilendetektor. Signale des Detektors K1-N werden hierzu mit Hilfe jeweils eines Strom-Spannungs-Wandlers (A) verstärkt und anschließend während der Pixelverweilzeit aufintegriert (I). Nach einer weiteren Verstärkung zur Pegelanpassung an einen Analog- / Digital Wandler (ADC) werden diese im ADC in digitale Signale gewandelt und an einen Rechner (PC) übertragen. Die Detektion mit einer CCD Matrix ist aus der Literatur bekannt.

**Anordnung 3: Strukturierte Beleuchtung mit quasisimultaner Aufnahme der Phasenbilder**

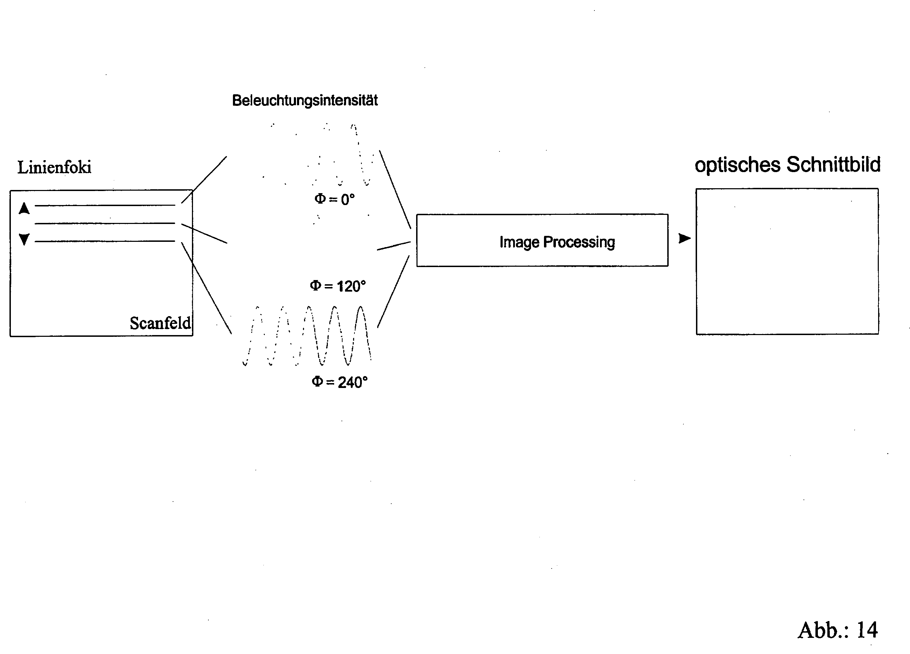

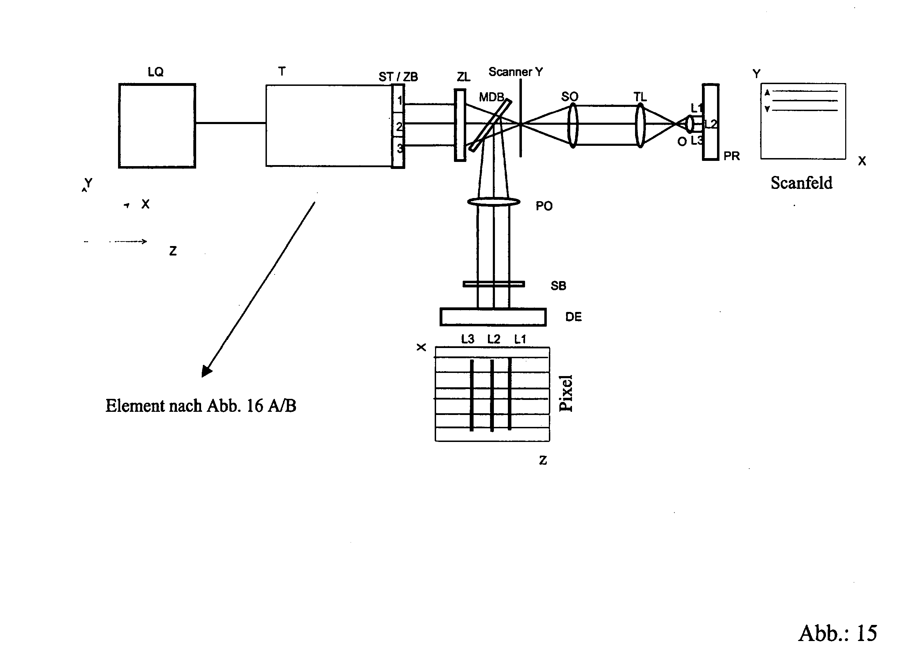

Die Detektion der Streifenbilder kann auch quasi simultan geschehen, indem statt eine Linie parallel mehrere Linien (z.B. L1, L2, L3) in die Probe abgebildet werden, wobei die Intensitätsstruktur (Bildphase) beispielsweise analog Abb. 4 jeweils um z.B. 120 ° bei Verwendung von beispielsweise drei Linien verschoben ist (Abb. 14). Somit wird beim einmaligen Scannen der Probe bereits die gesamte Information zur Auswertung der Daten generiert. Abb. 15 zeigt schematisch den optischen Aufbau in der YZ-Ebene. Jeweils eingezeichnet sind die Fokuspunkte entlang der y-Achse der Linienfoki. Das Anregungslicht kann mit einer Strahlteileranordnung (T) aufgespalten werden. Zwei Ausführungsformen der Strahlteileranordnung (T) sind in Abb. 16A/B , hier der Zylinderlinse vorgeordnet, gezeigt. Die erste Anordnung im Zusammenwirken mit der Zylinderlinse erzeugt mehrere diskrete Linienfoki mit zwei parallel angeordneten Spiegeln, wobei der erste Spiegel ein Vollspiegel und der zweite Spiegel ein teildurchlässiger Spiegel ist. Die Transmission des teildurchlässigen Spiegels ist abgestimmt auf jeden Teilstrahl (i) und ergibt sich aus 100%/(n-i), wobei n die Gesamtzahl der Einzelfoki ist. Die Anteile (i) gelangen im Anschluß separat in eine spezielle Gitterstruktur (ST), die schematisch in Abb. 16A dargestellt ist. Die Teilgitter sind bei dieser Struktur definiert phasenversetzt moduliert. Anstatt der aus Teilgittern zusammengesetzten Struktur kann auch ein Transmissionsgitter nach Abb. 7B, wie in Abb. 16A dargestellt, verdreht verwendet werden, womit der Phasenversatz der Struktur für die einzelnen Scanlinien bei jeweils gleicher Modulationsfrequenz gezielt eingestellt werden kann. Die Eichung der Vorrichtung, d.h. die Bestimmung der Modulationsfrequenz und der Phasenlagen der Scanlinien erfolgt nach dem oben beschriebenen Verfahren. Die Struktur befindet sich in einer Zwischenbildebene der Mikroskopanordnung. Die Teileranordnung kann beispielsweise auch in einer Pupillenebene der Mikroskopanordnung eingesetzt werden. Hierbei werden beide Spiegel gegeneinander verkippt, so dass wiederum mehrere Linienfoki entstehen.

Die zweite Anordnung in Abb.16 (Abb. 16B) ist eine spezielle Anordnung zur Erzeugung eines Doppellinienfokus. Die Anordnung verwendet wiederum zwei parallel angeordnete Spiegel (SP1 und SP 2), wobei ein Spiegel (SP1) die Struktur ST selbst trägt. Die Struktur ist reflektierend an den Stellen geringer Transmission. Die Struktur wird im Zwischenbild der Mikroskopanordnung angeordnet. Am Ausgang des Teilers entstehen 2 Linien, deren Amplitudenmodulation genau gegenphasig ist. Die Linie 1 trägt somit exakt eine gegenüber der Linie 2 um 180° verschobene Amplitudenmodulation. Die Struktur ist auf Glasplatte 1 aufgebracht. Bei Verwendung von mehreren Wellenlängen wird der wellenlängenabhängige Parallelversatz in y-Richtung durch die planparallele Glasplatte durch eine unter einem Winkel von 90° angeordnete 2te Glasplatte gleicher Dicke kompensiert. Zusätzlich kann die gesamte Teilereinheit (T) zur Erzeugung der oben beschriebenen Phasenkodierung leicht um die y-Achse verkippt werden. Eine Verschiebung der Struktur (ST) kann bei beiden Anordnungen entfallen. Die Scanbewegung des Y-Scanners erfolgt über das eigentliche zu untersuchende Bildfeld hinaus, so dass jeder zu untersuchende Punkt der Probe einmal mit jeweils einer Linie unterschiedlicher Phasenlage der Struktur beleuchtet wird. Diese Anordnung ist besonders vorteilhaft für die Untersuchung von sich schnell verändernden Proben, da sich Bewegungen oder schnelle Veränderungen in der Probe nicht mehr störend auf die Messung auswirken und die maximale Bildaufnahme-Geschwindigkeit des Linienscanners nicht durch die sequentielle Datenaufnahme reduziert wird. Die Detektion der parallel angeregten Linien erfolgt hierbei mit einem Matrixdetektor, im Falle von beispielsweise 3 Linien mit einem 3-Zeilendetektor. Alternativ kann auch ein Zeilendetektor zur Anwendung kommen, auf dem alle auf der Probe separierten Linien simultan detektiert werden. Die Separation der Information von jeder Linie kann durch den oben beschriebenen Algorithmus auf der Grundlage der verschiedenen Modulation (in Phase und / oder Frequenz) jeder Linie erfolgen.

**Anordnung 4: Strukturierte Beleuchtung mit quasisimultaner multispektraler Anregung**

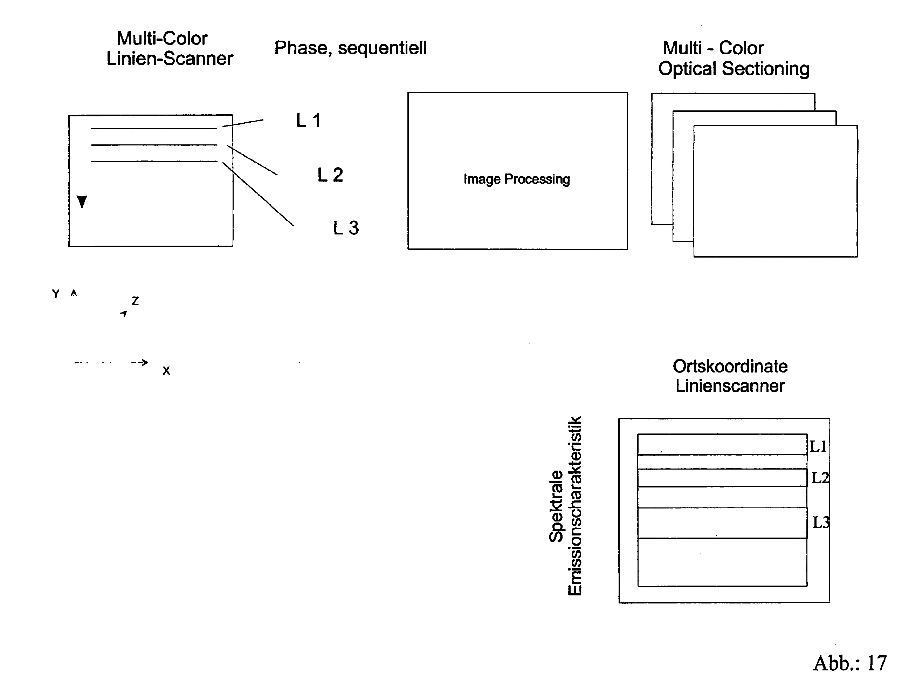

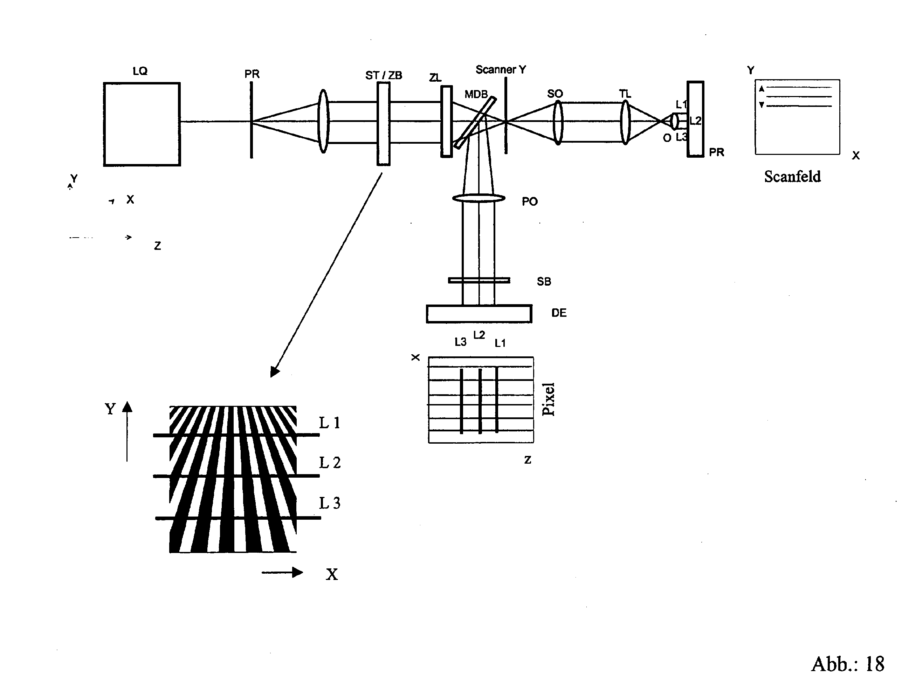

In einer vierten Anordnung werden mehrere diskret Anregungswellenlängen räumlich getrennt in verschiedene Scanlinien (z.B. bei 3 Laserlinien: L1, L2, L3 in x-Richtung) in die Probe abgebildet. Dazu werden durch ein dispersives Element (PR) (z.B. Transmissionsgitter, Gitterlinien in x-Richtung) mehrere parallele Anregungslinien unterschiedlicher Wellenlänge erzeugt (siehe Abb. 17), die mittels des y-Galvoscanners (y) und nachfolgender optischer Abbildung so über die Probe bewegt werden, dass jeder Punkt im interessanten Scanfeld mindestens einmal von jeder Linie gescannt wird. Der optische Aufbau ist in Abb. 18 schematisch in der YZ-Ebene gezeigt. Jeweils eingezeichnet sind die Strahlschwerpunkte der Linienfoki.

Die Abspaltung der Fluoreszenzsignale von der Anregung erfolgt wiederum mit dem Hauptfarbteiler (MDB). Dabei gelangen die Fluoreszenzsignale, die durch die verschiedenen Anregungslinien erzeugt wurden, auf unterschiedliche Positionen L1-L3 in z-Richtung eines Matrixdetektors mit vorgeordneten Schlitzblenden in x-Richtung , wobei die Achse senkrecht zur Beleuchtungslinie der entsprechenden Wellenlänge der Fluoreszenz entspricht. Die Achse entlang der Beleuchtungslinie auf dem Matrixdetektor entspricht hierbei der Ortskoordinate.

Zusätzlich erfolgt auch eine Phasen- bzw. Frequenzkodierung entsprechend den Anordnungen 1 und 2. Beispielsweise zur Phasenkodierung wird die Struktur (ST) um die Y-Achse verkippt. Eine Frequenzkodierung kann z.B. mit den in Abb. 7D gezeigten speziellen Struktur erfolgen. Die spektralen Anteile werden bei Einsatz einer Phasen- bzw.

Frequenzkodierung wiederum simultan mit einer Detektormatrix, die alle Scanlinien simultan erfaßt, detektiert. Dazu wird im einfachsten Falle eine CCD-Zeile mit rechteckigen Pixeln (oder zusammengeschalteten Zeilen) verwendet, wobei die längeren Seiten der Pixel vorteilhaft in Richtung z (siehe Abb. 18) ausgerichtet sind, so dass beispielsweise die Scanlinien L1 bis L3 gemeinsam mit der Detektorzeile detektiert werden. Die Trennung der Signale, die durch die verschiedenen Scanlinienfoki angeregt wurden, erfolgt dann wiederum nach dem oben beschriebenen Algorithmus. Der Vorteil dieser Anordnungen liegt darin, dass die einzelnen Scanlinien nicht mehr getrennt auf einem Detektorarray detektiert werden müssen, sondern mit einem eindimensionalen Detektor erfaßt werden können.

Zusätzlich kann ein weiteres dispersives Element der zusätzlichen spektralen Aufspaltung der Fluoreszenzsignale senkrecht zur Beleuchtungslinie dienen. Hierzu kann wiederum das in Abb. 12 gezeigte Detektionsschema des multispektralen Linienscanners eingesetzt werden. In einer Richtung des Detektors wird eine Ortskoordinate abgebildet. Die frei programmierbare Ansteuerung ausgewählter Detektorelemente (Zeilen) und die Kombination von Detektorelementen einer Spalte der Detektormatrix erlaubt eine flexible Auswahl von Spektralbereichen der Fluoreszenzemission. Hierzu können mehrere Zeilen des Detektors, in die verschiedene Fluoreszenzsignale entsprechend ihrer Wellenlänge abgebildet werden, elektronisch zusammen geschalten werden. Die multispektrale Detektion der Fluoreszenzemission kann wiederum mit der strukturierten Beleuchtung kombiniert werden. Dazu wird die linienförmige Anregung zusätzlich z.B. mittels eines Transmissionsgitters strukturiert. Durch sequentielle Detektion von Bildern strukturierter Objekte mit unterschiedlichen Bildphasen und nachfolgender Berechnung kann wieder der Tiefenkontrast optimiert werden. Abb. 18 zeigt die Kombination eines multispektralen Linienscanners mit strukturierter Beleuchtung. Die Bildphase wird mit verschiedenen Strukturen sequentiell variiert. Die unterschiedlichen spektralen Anteile werden beispielsweise parallel mittels CCD-Array detektiert. Als konfokale Schlitzblenden müssten nach dem Stand der Technik in dieser Anordnung mehrere zu den einzelnen Scanlinien konjugiert angeordnete und frei bewegliche Blenden verwendet werden, die jedoch durch die Strukturierung der Scanlinien entfallen können. Dadurch wird der technische Aufwand erheblich erleichtert.

**Anordnung 5: Strukturierte Beleuchtung mit punktförmiger Probenwechselwirkung**

In einer fünften Anordnung erfolgt statt einer linienförmigen Anregung der Probe eine punktförmige Anregung der Probe. Dazu wird das Laser Scanning Mikroskop entsprechend Abb. 1 nach dem Stand der Technik betrieben. Jedoch wird eine Struktur (ST) entsprechend Abb. 19 in einer Zwischenbildebene verwendet, die in Probenrichtung nach den Scannern x und y angeordnet ist. Durch das Scannen in x- bzw. y-Richtung wird die Struktur sukzessive in die Probe abgebildet. Die Aufnahme der Phasenbilder erfolgt durch ein Verschieben der Struktur mit PE. Zusätzlich kann auch eine quasisimultane Beleuchtung nach Anordnung 3 und 4 erfolgen. Eine Phasenkodierung bzw. Frequenzkodierung mit den oben beschriebenen Anordnungen ist ohne Einschränkung übertragbar. Der Vorteil dieser Anordnung gegenüber einem herkömmlichen Punktscanner ist, dass das Signal der Probe ohne descanning direkt mit einer CCD-Kamera gemessen werden kann. In diesem Falle wird auch auf die konfokale Blende verzichtet. Als CCD Kamera kann beispielsweise auch eine gegatete Kamera (Picostar, La Vision) verwendet werden. Dadurch können beispielsweise zeitaufgelöste Fluoreszenzaufnahmen von konfokalen optischen Schnitten erzielt werden. Dies ist nach dem Stand der Technik nur durch den Einsatz nichtlinearer Probenwechselwirkungen möglich.

Es kann jedoch auch eine descannte punktförmige Detektion bzw. partiell descannte Detektion (Lit.: Stimson et al., Rev. Of Sc. Instr., (70), p3351, 1999) nach dem Stand der Technik erfolgen.

Durch die Phasenkodierung bzw. Frequenzkodierung können mit den beschriebenen Detektionsvarianten weiterhin die Signale der Probe, angeregt durch verschiedene Wellenlängen, simultan aufgezeichnet werden. Dabei ist nur ein Detektor notwendig. Durch die Anordnung kann somit der Aufbau eines Laser Scanning Mikroskops entscheidend vereinfacht werden ohne dass die Flexibiltät eingeschränkt wird. Durch das Einschalten der Struktur kann zwischen einem herkömmliches Laser Scanning Mikroskop und einem Laser Scanning Mikroskop mit strukturierter Beleuchtung hin und her geschaltet werden.

Eine Kombination der Verfahren 1-5 ist ebenfalls Teil der Erfindung. Weiterhin ist auch eine Kombination der oben beschriebenen Verfahren mit sogenannten parallel scannenden Verfahren nach dem Stand der Technik ohne Einschränkung möglich. Bei diesen Verfahren erfolgt eine Abbildung mehrerer Punkte oder Linien gleicher Intensität simultan als Matrix in die Probe (Lit.: Buist et al., J. o. Microscopy (192), p217, 1998 / Nielsen et al., J. o. Microscopy (201), p368, 2001). Dadurch können die Bildaufnahmeraten nochmals gesteigert werden. Weiterhin kann die Probe mit einem Tischscanner oder einem Scanner nach dem Stand der Technik (z.B. Nipkow-Scheibe) abgebildet werden.

Die beschriebenen vorteilhaften Anordnungen können zusätzlich auch zur Untersuchung von makroskopischen Proben vorteilhaft eingesetzt werden. Makroskopische Proben werden beispielsweise beim Screenen von Wirkstoffen auf einem Chip eingesetzt. Die Kantenlänge der Scanfelder betragen hierbei einige 10 mm. Diese Scanfelder können z.B. durch eine Vergrößerung der Scanwinkel der Galvoscanner durch eine Anordnung der Probe in einem Zwischenbild der Mikroskopanordnung Beispielhaft in Fig.2 oder durch eine spezielle Objektivanordnung ( Makroobjektiv), die das Zwischenbild vergrößert auf die Probe abbildet erzielt werden.

In Hell et al.; Journal of Microscopy, Vol. 202, Pt 3, June 2001, pp. 457-463 wird eine Anordnung zur Erhöhung des Fluoreszenzsignales bei einer 2 oder 3-Photonen Anregung um einen Faktor 1.5 bzw. 2.5 beschrieben. Hierzu erfolgt eine parallele Anregung der Probe in mehreren Foki, die räumlich im Multiplexverfahren beleuchtet werden, wobei die durch Interferenz erzeugten Beleuchtungsmuster räumlich über eine Periode verschoben werden und das Signal über diese Periode zeitlich gemittelt registriert wird. Zweck dieser Anordnung ist die Erhöhung des Fluoreszenzsignals bei einer Multiphotonen-Anregung. Einen Einfluß auf die räumliche Auflösung hat dieses Verfahren nicht, d.h. die optische Auflösung wird durch die nichtlineare Wechselwirkung in den einzelnen Probenpunkten nach dem oben erläuterten Stand der Technik erzielt.

Erfindungsgemäß wird hier eine interferometrische Überlagerung mindestens zweier Teilstrahlen zur Umverteilung der mittleren Energie über das zu untersuchende Scanfeld verwendet. Durch die Umverteilung der mittleren Energie kommt es zu einer Erhöhung des Fluoreszenzsignals bei einer Multiphotonen-Anregung. Zusätzlich erzeugt die interferometrische Überlagerung der Teilstrahlen die bereits oben beschriebene Strukturierung der Scanlinie zur Erhöhung der optischen Auflösung. Bei gleichem Fluoreszenzsignal kann die mittlere Leistung pro Probenpunkt reduziert werden, so dass die zu untersuchende Probe weniger belastet wird. Zusätzlich können im Vergleich zum Stand der Technik bei gleicher Ausgangsleistung am Laser mehr Probenpunkte simultan untersucht oder bei gleicher Anzahl der Probenpunkte Laser mit geringerer Ausgangsleistung eingesetzt werden.

Das erfindungsgemäße Verfahren ist somit zum Einsatz in Applikationen, die eine nichtlineare Probenwechselwirkung erfordern, besonders geeignet, da diese mit verringerter Anregungsintensität und damit verringerter Probenschädigung untersucht werden können.

Das Prinzip des hier beschriebenen Verfahrens besteht darin, dass ein Laserstrahl mit Hilfe von Strahlteilern oder durch eine Pupillenteilung in mindestens zwei Teilstrahlen gleicher Leistung aufgeteilt wird, wobei die Wellenfronten der Teilstrahlen zueinander einen kleinen Winkel von typischerweise weniger als 5° einnehmen. Anschließend werden die n-Teilstrahlen in einem der Probe interferometrisch überlagert, wodurch sich in Abhängigkeit von dem eingestellten Winkel ein periodisches Streifenmuster ergibt. Die Intensität $I_M$ des Streifenmusters entlang der Koordinate x (Anregung) kann im allgemeinen wie folgt beschrieben werden:

$$I_M(x) = \left| \sum_{i=1}^{n} \sqrt{\frac{I_0}{n}} \cdot \exp\left(- i \cdot k \cdot \sin(\theta_i) \cdot x + \phi_i\right) \right|^2 \qquad (0)$$

$I_0$ ist hierbei die Gesamtintensität des Lasers auf der Probe, die zu gleichen Teilen auf die n Teilstrahlen aufgespalten ist. $\theta_i$ sind die Winkel und $\phi_i$ die Phasenbeziehungen zwischen den Teilstrahlen in Bezug auf einen willkürlich herausgegriffenen Teilstrahl.

Durch eine Phasenverschiebung (durch Änderung der Phasenbeziehungen $\phi_i$) der Struktur senkrecht zur optischen Achse können unterschiedliche Projektionsszenarien der Struktur erhalten werden.

Die Modulationsfrequenz der strukturierten Beleuchtung wird durch die Winkel $\theta_i$ bestimmt.

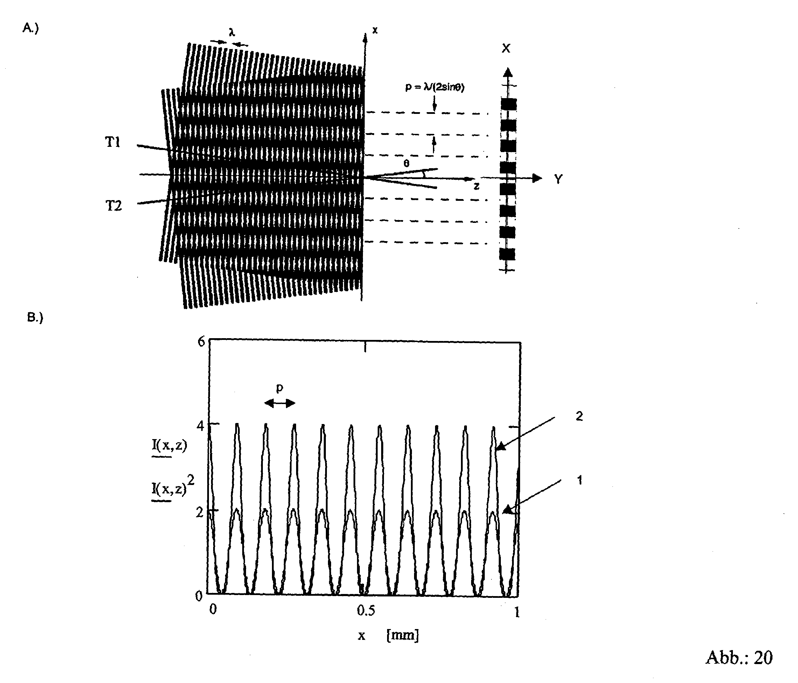

Abb.20A zeigt zwei ebene Wellenfronten in der X/Y Ebene - Teilstrahlen T1, T2 der Wellenlänge $\lambda$, die zur optischen Achse der Anordnung einen Winkel $\theta$ einschießen und miteinander interferieren.

Durch Fokussierung in Y- Richtung, beispielsweise durch eine Zylinderlinse ZL in die Probenebene ergibt sich eine beugungsbegrenzte periodische linienförmige Intensitätsverteilung entlang X auf der Probe. Die linienförmige Intensitätsverteilung entlang X auf der Probe kann weiterhin durch diffraktive oder holographische Elemente nach dem Stand der Technik (Lit.: "Diffractive optics improve product design", Photonics Spectra, Laurin Publishing Co., Inc. September 1995) erfolgen. Weiterhin kann eine so genannte Powell Linse, wie sie in US 4,826,299 beschrieben ist, eingesetzt werden. Letzteres Element erzeugt im Vergleich zur Zylinderlinse eine homogenere Intensitätsverteilung entlang der Linse. Die Powell Linse und die diffraktiven bzw. holographischen Elemente werden hierzu beispielsweise in einer Pupillenebene der Mikroskopvorrichtung besonders vorteilhaft zwischen Lichtquelle und Scanner angeordnet.

Für die allgemeine interferometrische Überlagerung von 2 Teilstrahlen gleicher Intensität (mit der Gesamtintensität von $I_0$) mit jeweils ebener Wellenfront ergibt sich folgende Intensitätsmodulation senkrecht zur optischen Achse:

$$I_m(x) = I_0 \cdot \left[1 + \cos(k \cdot \sin(\theta) \cdot x + \phi)\right] \quad , wobei \quad k \approx 2\pi / \lambda \qquad (1)$$

ist. $\theta$ ist der Winkel zwischen den beiden Wellenfronten der beiden Teilstrahlen. $\lambda$ und $\phi$ sind die Wellenlänge der Teilstrahlen bzw. die Phasenlage der Modulationsfrequenz p. Durch Veränderung des Winkels $\theta$ kann die Periode der Modulation gezielt eingestellt werden und eine Änderung der optischen Schnittdicke erfolgen (siehe weiter vom). Weiterhin ändert sich in Abhängigkeit von der verwendeten Wellenlänge die Modulationsfrequenz und es kann die bereits beschriebene Frequenzkodierung erfolgen. Die Phase der Modulationsfrequenz wird durch die Phasenbeziehung $\phi$ zwischen den beiden Teilstrahlen bestimmt. Durch Variation von $\phi$ entsprechend der vorangehenden Beschreibung können die Bildphasen eingestellt und eine Phasenkodierung durchgeführt werden.

Die resultierende Intensitätsmodulation für eine lineare Probenwechselwirkung (1-Photonenwechselwirkung) ist in Abb. 20B (1) dargestellt. Im Diagramm aufgetragen ist die jeweilige Intensität entlang der Scanlinie (x-Koordinate), wobei $I_0=1$ o.B.d.A. angenommen wurde. Die Modulation ist kosinusförmig mit der Periode p und pendelt zwischen 0 und 2 um die Symmetrieachse 1.

Im folgenden wird die Erhöhung der Signalausbeute bei einer nichtlinearen Probenwechselwirkung (Multiphotonenanregung, Erzeugung einer höheren Harmonischen) anhand der interferometrischen Überlagerung von 2 Teilstrahlen näher erläutert.

Findet eine nichtlineare Wechselwirkung mit der Probe statt, dann mißt ein Detektor folgendes, aus der Wechselwirkung resultierendes Signal $s_N$:

$$s_N(x) = I_M(x)^N = \left[I_0 \cdot \left[1 + \cos(k \cdot \sin(\theta) \cdot x + \phi)\right]\right]^N, \qquad (2)$$

wobei N die Ordnung der Nichtlinearität ist. Das sich aus dieser Gleichung ergebende Signal $s_N$ entlang der Scanlinie ist in Abb. 20B (2) für eine quadratische Probenwechselwirkung N=2 (wie z.B. 2-Photonenanregung) dargestellt, wobei $I_0=1$ o.B.d.A. angenommen wurde. Die Modulation ist weiterhin periodisch mit der Periode p. Jedoch ist die Modulation jetzt asymmetrisch und pendelt zwischen 0 und 4, da $\cos^2(x)$ asymmetrisch zu 1 ist. Diese Asymmetrie verstärkt sich für größere N.

Das pro Periode der Intensitätsmodulation generierte Signal $S_N$ erhält man durch eine Integration des Signals $s_N(x)$ in x-Richtung:

$$S_N = \int_0^p I_M(x)^N \, dx, \qquad (3)$$

Im Vergleich dazu ergibt sich für eine homogene Verteilung der Lichtintensität $I_0$ entlang der Scanlinie in Richtung x folgende Probenwechselwirkung:

$$F_N = \int_0^p I_0^N \, dx = I_0^N \cdot p \qquad (4)$$

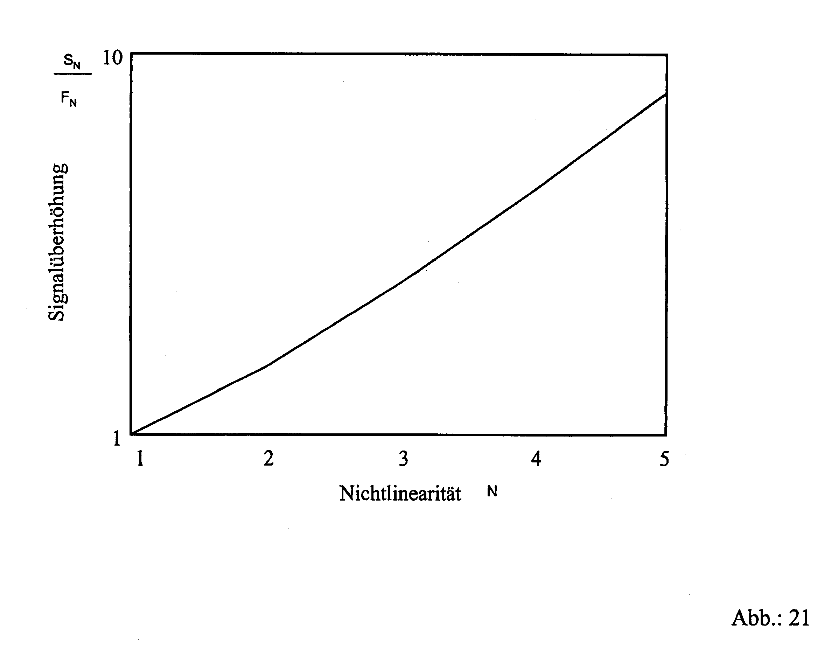

Abb. 21 zeigt noch einmal allgemein die Probenwechselwirkung bei Verwendung einer strukturierten Scanlinie im Vergleich zu einer homogenen Scanlinie, wobei jeweils die Intensitäten in beiden Linien gleich sind. Dargestellt ist das Verhältnis $S_N/F_N$ in Abhängigkeit von der Ordnung der Nichtlinearität N. Man erkennt, dass für N>1, d.h. für eine nichtlineare Probenwechselwirkung, das Verhältnis größer als 1 wird. Dies bedeutet, dass bei konstanter mittlerer Anregungsintensität $I_0$ die Effizienz der Probenwechselwirkung durch die Verwendung einer modulierten Linie im Vergleich zu einer homogenen Scanlinie steigt.. Im Falle einer 2 Photonenwechselwirkung ist die Effizienz beispielsweise um den Faktor 1.5 größer.

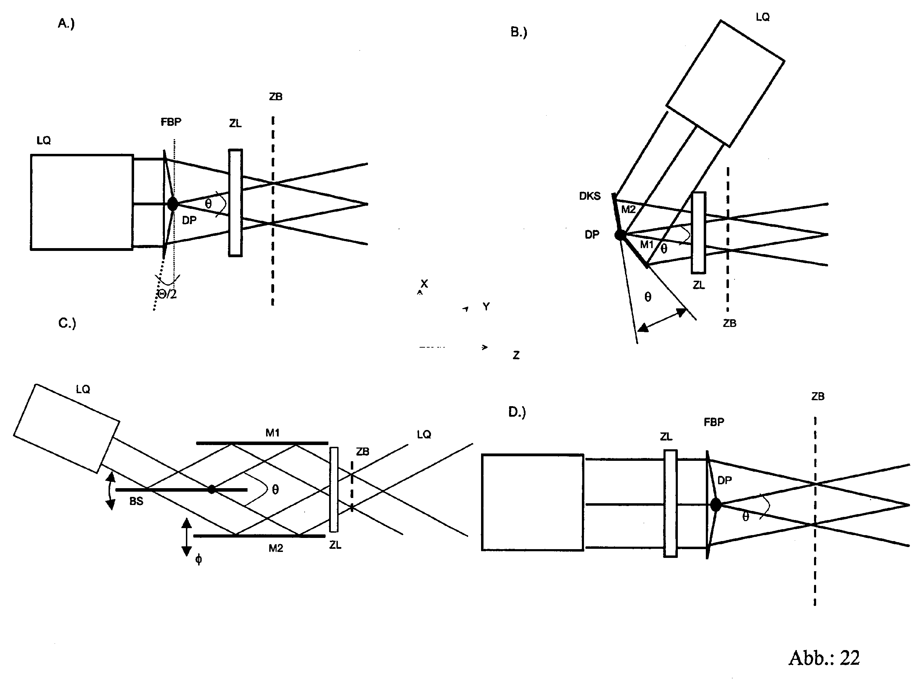

Abb. 22 zeigt schematisch verschiedene Aufbauten zur Erzeugung zweier Teilstrahlen. Jeweils eingezeichnet sind die Objektstrahlengänge. Unterschieden wird hierbei zwischen einer Erzeugung der Teilstrahlen durch eine Teilung der Mikroskoppupille (Teilbilder A. und B.) und durch den Einsatz von Strahlteilern (Teilbild C.). Die Aufspaltung in die 2 Teilstrahlen erfolgt in einer Pupillenebene des Mikroskops und in der xz-Ebene der Mikroskopanordnung, d.h. in der Ebene in der die Scanlinie erzeugt wird. Eine Teilung der Pupille ist insbesondere für den Einsatz von mehreren Wellenlängen über einen breiten Spektralbereich sinnvoll, da die Energieverteilung auf die beiden Teilstrahlen wellenlängenunabhängig ist. Nachteilig ist jedoch, wenn das Strahlprofil der Lichtquelle nicht homogen ist. Hierdurch kann es bei den Anordnungen A und B zu einer ungleichmäßigen Modulationstiefe entlang der Scanlinie kommen. Dies wird durch die Anordnung im Teilbild C vermieden. Jedoch steigen bei dieser Anordnung die Anforderungen an die Spektraleigenschaften des Strahlteilers. Generell ist eine Anpassung des Strahlprofils, z.B. durch den Einsatz von diffraktiven Elementen und eine Kombination mit Anordnungen nach Teilbild A, B oder C möglich.

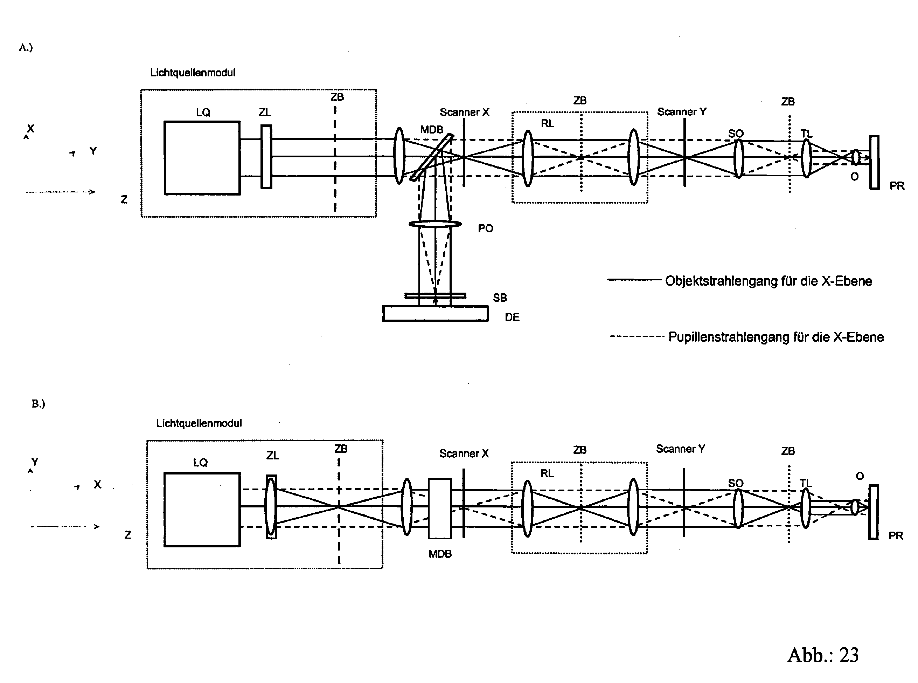

Im Teilbild A wird Licht der Lichtquelle LQ, die ein kollimiertes Lichtbündel erzeugt, durch ein Fresnelsches Biprisma FBP gesendet. Die Zylinderlinse ZL befindet sich nach FBP und wirkt in der Ebene senkrecht zur Zeichenebene und optischen Achse. ZL kann wie in Abb. 22D dargestellt auch vor FBP ohne Einschränkung angeordnet sein. Durch das Biprisma erfolgt die Aufspaltung des kollimierten Strahles der Lichtquelle in 2 Teilstrahlen gleicher Energie, die einen Winkel θ von typischerweise kleiner 5° einnehmen. Die beiden Teilstrahlen kreuzen sich in einem Zwischenbild ZB der Mikroskopanordnung. In der xy-Ebene befindet sich die durch Zylinderoptik ZL geformte Linie entlang der x-Richtung im Zwischenbild. Hier eingezeichnet ist beispielhaft eine Zylinderoptik ZL, die das Licht der Lichtquelle LQ in das Zwischenbild ZB fokussiert, d.h. die ZL steht genau im Abstand ihrer Brennweite vom Zwischenbild entfernt. Durch die nachfolgende Optik der Mikroskopanordnung (siehe Abb. 9, 10, 11, 12 und 23) gelangen die Teilstrahlen über die Scanner X und Y, die Scanoptik SO, die Tubuslinse TL und das Objektiv O in die Probe. In der Probe überlagern sich die beiden Teilstrahlen interferometrisch und bilden eine periodisch strukturierte Scanlinie entlang der x-Achse. Die Periode der Scanlinie ist abhängig von dem Neigungswinkel θ des FBP (siehe Abb. 22A) und der Wellenlänge von LQ. Durch eine Verdrehung von FBP um den Drehpunkt DPin Abb. 22A kann die Bildphase, d.h. φ gezielt eingestellt werden. Für eine detaillierte Beschreibung der Mikroskopanordnung und des Verfahrens zur Generierung der Phasenbilder und der Berechnung der Schnittbilder wird auf die bereits erfolgte Beschreibung verwiesen. Der Vorteil der Variante A. ist, dass durch ein Einschalten FBP und ZL in den Mikroskopischen Strahlengang ein punktscannendes Laser Scanning Mikroskop besonders vorteilhaft in ein in Echtzeit und parallel scannendes Mikroskop umkonfiguriert werden Weiterhin ist die Modulationsfrequenz stark von der Wellenlänge des eingestrahlten Lichtes durch die prismatische Wirkung von FBP abhängig. Dies ist insbesondere für die Frequenzkodierung (siehe weiter oben ) vorteilhaft. Jedoch ist die prismatische Wirkung von FBP für den Einsatz von Kurzpulslasern mit Pulslängen von kleiner 100 fs problematisch, da die einzelnen Spektralkomponenten der Laserpulse an verschiedene Orte der Probe abgebildet werden und es infolgedessen zu einer Verbreiterung der Pulse und damit zu einer Verringerung der Pulsspüzenleistung kommen kann. Abb. 22B zeigt daher eine weitere vorteilhafte Anordnung. Hierzu erfolgt die Aufspaltung mit einem reflektiven Element wie z.B. einem Dachkantenspiegel DKS. DKS ist so im Lichtquellenmodul (siehe Abb. 9, 10, 11, 12 und 23) angeordnet, dass sich die Teilstrahlen mit gleicher Energie in ZB in der xz-Ebene unter einem Winkel von θ kreuzen. ZL fokussiert wiederum die LQ in der yz-Ebene, so dass eine Linie in ZB geformt wird. Durch eine Veränderung des Winkels zwischen den beiden Spiegeln M1 und M2, z.B. durch ein Piezosteller oder eine Spindel, die gegen M2 oder M1 drückt, kann der Winkel θ zwischen den beiden Teilstrahlen und damit die Modulationsfrequenz gezielt eingestellt werden. Zusätzlich kann eine Einstellung der Bildphase φ durch eine Verdrehung von DKS um die eingezeichnete Drehachse DP erfolgen. Die Aufnahme und die Berechnung der optischen Schnitte geschieht wiederum analog zu dem bereits beschriebenen Verfahren.

In der Anordnung nach Teilbild C werden durch den Strahlteiler BS - ein teildurchlässiger Planspiegel, 2 Teilstrahlen mit gleicher Energie erzeugt. Dies ist beispielsweise in DE 19904592 A1 beschrieben worden, hier erfolgt jedoch vorteilhaft ein Zusammenwirken mit dem Element zur Formung der linienförmigen Intensitätsverteilung z.B. mittels Zylinderlinse ZL zur Erzeugung einer Scanlinie.

Die Teilstrahlen gelangen im Anschluß über 2 Spiegel M1 und M2 in Richtung ZB, so dass sie sich genau in ZB in der xz-Ebene kreuzen. ZL fokussiert wiederum den Strahl in der yz-Ebene, so dass in ZB eine Linie entlang x entsteht. Durch eine Verdrehung von BS kann der Winkel θ eingestellt werden. Die Einstellung der Bildphase φ kann durch eine Verschiebung von M1 bzw. M2 oder durch eine gemeinsame Verschiebung von M1 und M2 bei konstantem Abstand erfolgen. Die Aufnahme und die Berechnung der optischen Schnitte geschieht wiederum analog zu obiger Beschreibung.

Zur Gesamtanordnung eines Mikroskopes, insbesondere Laser- Scanning-Mikroskopes, mit den beschriebenen Anordnungen zur Interferenz von Teillichtstrahlen wird auf bereits beschriebene Anordnungen ( z.B. Fig.9, 19, 23) verwiesen, die ein Lichtquellenmodul entsprechend enthalten.

## Patentansprüche

**1.** Verfahren zur tiefenaufgelösten optischen Erfassung einer Probe mittels Mehrfachfluoreszenz, bei dem eine Probe oder ein Teil davon mittels punkt- oder linienförmiger Beleuchtung abgetastet wird,

- die Beleuchtung der Probe im Fokus amplitudenmoduliert wird,
- von der Probe kommendes Fluoreszenzlicht mittels eines Detektors erfaßt und daraus Fluoreszenzbilder der Probe erzeugt werden,
- und aus den Fluoreszenzbildern mittels eines vorgegebenen Algorithmus mindestens ein optisches Schnittbild durch die Probe berechnet wird,
- **dadurch gekennzeichnet, daß**
- die Probe oder ein Teil davon mit Licht N verschiedener Anregungswellenlängen simultan beleuchtet wird,

- mit einer natürlichen Zahl N > 1,
- jeder dieser Anregungswellenlängen eine Amplitudenmodulation aufgeprägt wird, wobei sich die Amplitudenmodulation von Anregungswellenlänge zu Anregungswellenlänge hinsichtlich Phase- und/oder Frequenz unterscheidet,
- N+1 Fluoreszenzbilder aufgenommen werden, wobei für jedes Fluoreszenzbild die Amplitudenmodulation relativ zur Probe verschoben wird,
- die N+1 Fluoreszenzbilder der Berechnung des optischen Schnittbildes zugrunde gelegt werden, und
- anhand des Schnittbildes die Fluoreszenzbilder simultan bewertet werden.

2. Verfahren nach Anspruch 1 **dadurch gekennzeichnet, daß** das detektierte Licht aus einer linearen oder nichtlinearen Wechselwirkung der Beleuchtung mit der Probe oder eines Teils davon resultiert.

3. Verfahren nach Anspruch 2, **dadurch gekennzeichnet, daß** die N verschiedenen Anregungswellenlängen aufgrund einer durch die Phasen- oder Frequenzunterschiede erzielten Phasen- oder Frequenzkodierung voneinander getrennt werden.

4. Verfahren nach einem der vorgenannten Ansprüche, **dadurch gekennzeichnet, daß** eine linienförmige Abtastung mit mehreren Linien simultan erfolgt.

5. Verfahren nach einem der vorgenannten Ansprüche, **dadurch gekennzeichnet, daß** bei der Berechnung von Phasenbildern ($I_j(x)$ mit der Bildphase: $\varphi_i$) mit Phasenkodierung der Anregungswellenlänge ($\phi_j$) Bilder berechnet werden, die für die jeweilige j-te Anregungswellenlänge charakteristische Bildinformationen vom pseudokonfokalen Schnitt ($C_j$) und vom Hintergrund ($B_j$) enthalten:

$$I_0(x) = \sum_{j=1}^{n} C_j(x) \cdot \cos(k \cdot x + \phi_j + \varphi_0) + B_j(x)$$

$$I_1(x) = \sum_{j=1}^{n} C_j(x) \cdot \cos(k \cdot x + \phi_j + \varphi_1) + B_j(x)$$

$$I_2(x) = \sum_{j=1}^{n} C_j(x) \cdot \cos(k \cdot x + \phi_j + \varphi_2) + B_j(x)$$

$$\ldots$$

$$I_n(x) = \sum_{j=1}^{n} C_j(x) \cdot \cos(k \cdot x + \phi_j + \varphi_n) + B_j(x)$$

, wobei

$$\begin{pmatrix} c_{11} & c_{12} & \ldots & \ldots \\ c_{21} & c_{22} & \ldots & \ldots \\ \ldots & \ldots & \ldots & \ldots \\ c_{n1} & c_{n2} & \ldots & c_{nn} \end{pmatrix} \cdot \begin{pmatrix} C_1 \\ C_2 \\ \ldots \\ C_n \end{pmatrix} = \begin{pmatrix} I_1 - I_0 \\ I_2 - I_0 \\ \ldots \\ I_n - I_0 \end{pmatrix}$$

mit $c_{ij}(x) = \cos(k \cdot x + \phi_j + \varphi_i) - \cos(k \cdot x + \phi_j)$.

6. Verfahren nach einem der vorgenannten Ansprüche, **dadurch gekennzeichnet, daß** die optische Schnittdicke variiert wird, indem Strukturen mit verschiedenen Modulationsfrequenzen abgebildet werden.

7. Verfahren nach Anspruch 6, **dadurch gekennzeichnet, daß** bei Beleuchtung mit mehreren Anregungswellenlängen die Schnittdicke durch eine Anpassung der jeweiligen Modulationsfrequenz gleich eingestellt wird.

8. Verfahren nach einem der vorgenannten Ansprüche, **dadurch gekennzeichnet, daß** die Phasenkodierung der Anregungswellenlängen erfolgt, indem das Beleuchtungslicht spektral in seine Anteile aufgespalten wird, die Anteile in eine Brennebene abgebildet werden und in oder in der Nähe der Brennebene in Abhängigkeit von der Anregungswellenlänge beeinflußt werden, und die Anteile anschließend wieder zusammengeführt werden.

9. Verfahren nach Anspruch 8, **dadurch gekennzeichnet, daß** die spektrale Aufspaltung in einem Zwischenbild erfolgt.

10. Verfahren nach einem der vorgenannten Ansprüche, **dadurch gekennzeichnet, daß** die Frequenzkodierung der Anregungswellenlängen erfolgt, indem der Abbildungsmaßstab in Abhängigkeit von den Anregungswellenlängen verändert wird.

11. Verfahren nach einem der vorgenannten Ansprüche, **dadurch gekennzeichnet, daß** von der Probe kommendes Licht vor der Detektierung spektral zerlegt wird.

12. Verfahren nach einem der vorgenannten Ansprüche, **dadurch gekennzeichnet, daß**

- zur Amplitudenmodulation der Beleuchtung ein Lichtstrahl, der mehrere Anregungswellenlängen aufweist, in mehrere Teillichtstrahlen zerlegt wird,
- diese interferometrisch überlagert und zu einer Linie geformt werden, und
- über die Variation des Winkels der Überlagerung der Teilstrahlen die Periode der Intensitätsstruktur und damit die optische Schnittdicke eingestellt wird.

13. Verfahren nach einem der vorgenannten Ansprüche, **dadurch gekennzeichnet, daß** die detektierten Fluoreszenzsignale durch Mehrphotonenfluoreszenzanregung und /oder durch Erzeugung höherer Harmonischer der Lichtfrequenz erzeugt werden.

14. Anwendung des Verfahrens nach einem der vorgenannten Ansprüche bei Fluoreszenzlebensdauermessungen des von der Probe emittierten Lichts.

15. Anordnung zur tiefenaufgelösten optischen Erfassung einer Probe mittels Mehrfachfluoreszenz, umfassend

- Mittel zur punkt- oder linienförmigen Beleuchtung der Probe mit mindestens einer Anregungswellenlänge,
- Mittel zur Amplitudenmodulierung der Beleuchtung der Probe im Fokus,
- Mittel zur Erzeugung einer Relativbewegung zwischen Probe und Beleuchtungslicht,
- einen Detektor zur Erfassung des von der Probe kommenden Fluoreszenzlichts,
- Mittel zum Erzeugen von Fluoreszenzbildern der Probe aus dem Fluoreszenzlicht, sowie
- Mittel zur Berechnung eines optischen Schnittbildes aus den Fluoreszenzbildern,
- **gekennzeichnet dadurch, daß**
- die Mittel zur Beleuchtung der Probe die Probe simultan mit N verschiedenen Anregungswellenlängen beleuchten, wobei N eine natürliche Zahl N > 1 ist,
- die Mittel zur Amplitudenmodulierung jeder dieser Anregungswellenlängen eine Amplitudenmodulation aufprägen, wobei sich die Amplitudenmodulationen von Anregungswellenlänge zu Anregungswellenlänge hinsichtlich Phase und/oder Frequenz unterscheiden,
- der Detektor geeignet ist, N+1 Fluoreszenzbilder zu erfassen, wobei die Mittel zur Amplitudenmodulierung für jedes Fluoreszenzbild die Amplitudenmodulation relativ zur Probe verschieben, sowie durch
- Mittel zur simultanen Bewertung der Fluoreszenzbilder der Probe anhand des Schnittbildes.

16. Anordnung nach Anspruch 15, **dadurch gekennzeichnet, daß** als Mittel zur Erzeugung der Relativbewegung mindestens ein Scanner vorgesehen ist.

17. Anordnung nach Anspruch 15 oder 16, **dadurch gekennzeichnet, daß** eine Einheit zur Aufspaltung und Zusammenführung des Beleuchtungslichts in seine spektralen Bestandteile vorgesehen ist, wobei zwischen Aufspaltung und Zusammenführung eine Abbildungsoptik zur Abbildung der spektralen Anteile in eine Brennebene vorgesehen ist und in oder in der Nähe der Brennebene ein Mittel zur wellenlängenabhängigen Strukturierung des Beleuchtungslichts vorgesehen ist.

18. Anordnung nach Anspruch 17, **dadurch gekennzeichnet, daß** eine dispersive Aufspaltung in einer Zwischenbildebene erfolgt.

19. Anordnung nach einem der Ansprüche 15 bis 18, **dadurch gekennzeichnet, daß** zur Erzeugung eines von den Anregungswellenlängen abhängigen Parallelversatzes des Beleuchtungslichtes gegenüber der optischen Achse eine verkippte planparallele Platte in einem Zwischenbild vorgesehen ist.

20. Anordnung nach einem der Ansprüche 15 bis 19, **dadurch gekennzeichnet, daß** als Mittel zur Amplitudenmodulierung der Beleuchtung ein um die optische Achse drehbares, bezüglich seiner Transparenz strukturiertes optisches Element vorgesehen ist.

21. Anordnung nach Anspruch 20, **dadurch gekennzeichnet, daß** das Element aus mehreren bezüglich der Transparenz unterschiedlich strukturierten Teilen zusammengesetzt ist.

22. Anordnung nach einem der Ansprüche 20 oder 21, **dadurch gekennzeichnet, daß** das Element senkrecht zur optischen Achse verschiebbar ist.

23. Anordnung nach einem der Ansprüche 15 bis 22, **dadurch gekennzeichnet, daß** zur Einstellung verschiedener Bildphasen die Lage mindestens eines Scanners verstellbar ist.

24. Anordnung nach einem der Ansprüche 15 bis 23, **dadurch gekennzeichnet, daß** zur Einstellung verschiedener Frequenzstrukturen in den Strahlengang einschwenkbare Gitter verschiedener Periodizität vorgesehen sind.

25. Anordnung nach einem der Ansprüche 15 bis 24, **dadurch gekennzeichnet, daß**

- zur Beleuchtung ein Lichtstrahl vorgesehen ist, der N unterschiedliche Anregungswellenlängen aufweist,
- Mittel zur Zerlegung des Lichtstrahls in mehrere Teillichtstrahlen, bevorzugt in Form einer Pupillenteilung zur Erzeugung der Teilstrahlen, und
- Mittel zur interferometrischen Überlagerung dieser Teilstrahlen in der Probe vorgesehen sind.

26. Anordnung nach Anspruch 25, **dadurch gekennzeichnet, daß** eine Pupillenteilung, ein Dachkantenspiegel, ein mit zwei Spiegeln zusammenwirkender Strahlteiler oder ein Fresnelsches Biprisma zur Erzeugung der Teilstrahlen vorgesehen sind.

27. Anordnung nach Anspruch 26, **dadurch gekennzeichnet, daß** das Biprisma um die optische Achse drehbar ist, so daß verschiedene Bildphasen eingestellt werden können.

28. Anordnung nach Anspruch 26, **dadurch gekennzeichnet, daß** der Dachkantenspiegel um die optische Achse drehbar ist, so daß verschiedene Bildphasen eingestellt werden können.

29. Anordnung nach Anspruch 26, **dadurch gekennzeichnet, daß** der Winkel des Dachkantenspiegels veränderbar ist, so daß verschiedene Frequenzstrukturen eingestellt werden können.

30. Anordnung nach Anspruch 25, **dadurch gekennzeichnet, daß** zur Erzeugung der Teilstrahlen ein mit zwei Spiegeln zusammenwirkender Strahlteiler vorgesehen ist.

31. Anordnung nach Anspruch 30, **dadurch gekennzeichnet, daß** einer der Spiegel verschiebbar gelagert ist, so daß verschiedene Bildphasen eingestellt werden können.

32. Anordnung nach Anspruch 30 oder 31, **dadurch gekennzeichnet, daß** der Strahlteiler drehbar gelagert ist, so daß verschiedene Frequenzstrukturen eingestellt werden können.

33. Anordnung nach Anspruch 30 oder 31, **dadurch gekennzeichnet, daß** mindestens einer der Spiegel drehbar gelagert ist, so daß durch Drehung verschiedene Frequenzstrukturen eingestellt werden können.

34. Anordnung nach einem der Ansprüche 25 bis 33, **dadurch gekennzeichnet, daß** ein zweidimensional ortsauflösender Detektor vorgesehen und diesem mindestens ein dispersives Element vorgeordnet ist, wobei in einer der beiden Dimensionen die vom dispersiven Element aufgespalteten spektralen Komponenten des von der Probe kommenden Fluoreszenzlichtes detektiert werden.

**Claims**

1. Method for the depth-resolved optical detection of a sample by means of multiple fluorescence, wherein a sample or a part thereof is scanned by means of punctiform or linear illumination,

   - the illumination of the sample at the focus is amplitude-modulated,
   - fluorescent light coming from the sample is detected by means of a detector and fluorescent images of the sample are generated therefrom,
   - and at least one optical section image through the sample is calculated from the fluorescent images by means of a predefined algorithm,
   - **characterized in that**
   - the sample or a part thereof is illuminated simultaneously with light having N different excitation wavelengths,
   - with a natural number N > 1,
   - an amplitude modulation is impressed on each of said excitation wavelengths, the amplitude modulation differing from excitation wavelength to excitation wavelength with regard to phase and/or frequency,
   - N + 1 fluorescent images are recorded, for each florescent image the amplitude modulation being shifted relative to the sample,
   - the N + 1 fluorescent images are taken as a basis for the calculation of the optical section image, and
   - the fluorescent images are assessed simultaneously on the basis of the section image.

2. Method according to Claim 1, **characterized in that** the detected light results from a linear or non-linear interaction of the illumination with the sample or part thereof.

3. Method according to Claim 2, **characterized in that** the N different excitation wavelengths are separated from one another on account of a phase or frequency coding obtained by means of the phase or frequency differences.

4. Method according to any of the preceding claims, **characterized in that** a linear scanning is effected with a plurality of lines simultaneously.

5. Method according to any of the preceding claims, **characterized in that**, in the calculation of phase images ($I_j(x)$ with the image phase: $\varphi_i$) with phase coding of the excitation wavelength ($\square_j$), images are calculated which contain image information of the pseudo-confocal section ($C_j$) and of the background ($B_j$), said image information being characteristic of the respective j-th excitation wavelength:

$$I_0(x) = \sum_{j=1}^{n} C_j(x) \cdot \cos(k \cdot x + \phi_j + \varphi_0) + B_j(x)$$

$$I_1(x) = \sum_{j=1}^{n} C_j(x) \cdot \cos(k \cdot x + \phi_j + \varphi_1) + B_j(x)$$

$$I_2(x) = \sum_{j=1}^{n} C_j(x) \cdot \cos(k \cdot x + \phi_j + \varphi_2) + B_j(x)$$

$$\ldots$$

$$I_n(x) = \sum_{j=1}^{n} C_j(x) \cdot \cos(k \cdot x + \phi_j + \varphi_n) + B_j(x)$$

where

$$\begin{pmatrix} c_{11} & c_{12} & \ldots & \ldots \\ c_{21} & c_{22} & \ldots & \ldots \\ \ldots & \ldots & \ldots & \ldots \\ c_{n1} & c_{n2} & \ldots & c_{nn} \end{pmatrix} \cdot \begin{pmatrix} C_1 \\ C_2 \\ \ldots \\ C_n \end{pmatrix} = \begin{pmatrix} I_1 - I_0 \\ I_2 - I_0 \\ \ldots \\ I_n - I_0 \end{pmatrix}$$

with $c_{ij}(x)=\cos(k\cdot x+\phi_j+\varphi_i)-\cos(k\cdot x+\phi_j)$.

6. Method according to any of the preceding claims, **characterized in that** the optical section thickness is varied by imaging structures with different modulation frequencies.

7. Method according to Claim 6, **characterized in that**, in the case of illumination with a plurality of excitation wavelengths the section thickness is set in an identical fashion by means of an adaptation of the respective modulation frequency.

8. Method according to any of the preceding claims, **characterized in that** the phase coding of the excitation wavelengths is effected by a procedure in which the illumination light is split spectrally into its components, the components are imaged into a focal plane and are influenced in or in the vicinity of the focal plane in a manner dependent on the excitation wavelength, and the components are subsequently recombined.

9. Method according to Claim 8, **characterized in that** the spectral splitting is effected in an intermediate image.

10. Method according to any of the preceding claims, **characterized in that** the frequency coding of the excitation wavelengths is effected by altering the imaging scale in a manner dependent on the excitation wavelengths.

11. Method according to any of the preceding claims, **characterized in that** light coming from the sample is spectrally decomposed prior to the detection.

12. Method according to any of the preceding claims, **characterized in that**

- for the amplitude modulation of the illumination, a light beam having a plurality of excitation wavelengths is decomposed into a plurality of partial light beams,
- the latter are inter-ferrometrically superimposed and shaped to form a line, and
- the period of the intensity structure, and hence the optical section thickness, is set by means of the variation of the angle of the superimposition of the partial beams.

13. Method according to any of the preceding claims, **characterized in that** the detected fluorescence signals are generated by multiphoton fluorescence excitation and/or by generation of higher harmonics of the light frequency.

14. Use of the method according to any of the preceding claims in fluorescence lifetime measurements of the light emitted by the sample.

15. Arrangement for the depth-resolved optical detection of a sample by means of multiple fluorescence, comprising

- means for the punctiform or linear illumination of the sample with at least one excitation wavelength,
- means for the amplitude modulation of the illumination of the sample at the focus,
- means for producing a relative movement between sample and illumination light,
- a detector for detecting the fluorescent light coming from the sample,
- means for generating fluorescent images of the sample from the fluorescent light, and
- means for calculating an optical section image from the fluorescent images,
- **characterized in that**
- the means for illuminating the sample illuminate the sample simultaneously with N different excitation wavelengths, where N is a natural number N > 1,
- the means for amplitude modulation impress an amplitude modulation on each of said excitation wavelengths, the amplitude modulation differing from excitation wavelength to excitation wavelength with regard to phase and/or frequency,
- the detector is suitable for detecting N + 1 fluorescent images, the means for amplitude modulation shifting the amplitude modulation relative to the sample for each fluorescent image, and by
- means for simultaneously assessing the fluorescent images of the sample on the basis of the section image.

16. Arrangement according to Claim 15, **characterized in that** at least one scanner is provided as means for producing the relative movement.

17. Arrangement according to Claim 15 or 16 **characterized in that** a unit for splitting the illumination light into its spectral constituents and combining the latter is provided, an imaging optical unit for imaging the spectral components into a focal plane being provided between splitting and combining and a means for the wavelength-dependent structuring of the illumination light being provided in or in the vicinity of the focal plane.

18. Arrangement according to Claim 17, **characterized in that** a dispersive splitting is effected in an intermediate image plane.

19. Arrangement according to any of Claims 15 to 18, **characterized in that**, for producing a parallel offset - dependent on the excitation wavelengths - of the illumination light relative to the optical axis, a tilted plane-parallel plate is provided in an intermediate image.

20. Arrangement according to any of Claims 15 to 19, **characterized in that** an optical element which is rotatable about the optical axis and is structured with regard to its transparency is provided as means for the amplitude modulation of the illumination.

21. Arrangement according to Claim 20, **characterized in that** the element is composed of a plurality of parts that are structured differently with regard to the transparency.

22. Arrangement according to either of Claims 20 and 21, **characterized in that** the element is displaceable perpendicularly to the optical axis.

23. Arrangement according to any of Claims 15 to 22, **characterized in that** the position of at least one scanner is adjustable for setting different image phases.

24. Arrangement according to any of Claims 15 to 23, **characterized in that** gratings of different periodicity that are pivotable into the beam path are provided for setting different frequency structures.

25. Arrangement according to any of Claims 15 to 24, **characterized in that**

- a light beam having N different excitation wavelengths is provided for the illumination,
- means for decomposing the light beam into a plurality of partial light beams, preferably in the form of a pupil splitting for generating the partial beams, and
- means for inter-ferrometrically superimposing these partial beams in the sample are provided.

26. Arrangement according to Claim 25, **characterized in that** a pupil splitting, a roof-edge mirror, a beam splitter interacting with two mirrors or a Fresnel biprism is provided for generating the partial beams.

27. Arrangement according to Claim 26, **characterized in that** the biprism is rotatable about the optical axis, such that different image phases can be set.

28. Arrangement according to Claim 26, **characterized in that** the roof-edge mirror is rotatable about the optical axis, such that different image phases can be set.

29. Arrangement according to Claim 26, **characterized in that** the angle of the roof-edge mirror can be altered, such that different frequency structures can be set.

30. Arrangement according to Claim 25, **characterized in that** a beam splitter interacting with two mirrors is provided for generating the partial beams.

31. Arrangement according to Claim 30, **characterized in that** one of the mirrors is mounted in a displaceable fashion, such that different image phases can be set.

32. Arrangement according to Claim 30 or 31, **characterized in that** the beam splitter is mounted in a rotatable fashion, such that different frequency structures can be set.

33. Arrangement according to Claim 30 or 31, **characterized in that** at least one of the mirrors is mounted in a rotatable fashion, such that different frequency structures can be set by rotation.

**34.** Arrangement according to any of Claims 25 to 33, **characterized in that** a two-dimensionally spatially resolving detector is provided and at least one dispersive element is disposed upstream thereof, the spectral components of the fluorescent light coming from the sample which are split by the dispersive element being detected in one of the two dimensions.

**Revendications**

**1.** Méthode de détection optique à résolution de la profondeur d'un échantillon au moyen de fluorescence multiple, dans laquelle on balaie un échantillon ou une partie de celui-ci au moyen d'un éclairage par point ou sous forme de ligne,

- on module l'amplitude de l'éclairage de l'échantillon dans la focalisation,
- on enregistre la lumière fluorescente provenant de l'échantillon au moyen d'un détecteur et à partir de cela, on génère des images de fluorescence de l'échantillon, et
- à partir des images de fluorescence, on calcule au moins une image de coupe optique à travers l'échantillon au moyen d'un algorithme prédéfini,
- **caractérisée en ce que**
- on éclaire l'échantillon ou une partie de celui-ci simultanément avec de la lumière de N longueurs d'ondes d'excitation différentes,
- avec un nombre naturel N > 1
- on attribue une amplitude de modulation à chacune de ces longueurs d'ondes d'excitation, l'amplitude de modulation des longueurs d'ondes d'excitation se distinguant des longueurs d'ondes d'excitation du point de vue phase et/ou fréquence,
- on enregistre les N+1 images de fluorescence en déplaçant pour chaque image de fluorescence, la modulation d'amplitude par rapport à l'échantillon,
- on prend pour base les N+1 images de fluorescence du calcul de l'image de coupe optique, et
- on évalue simultanément les images de fluorescence à l'aide de l'image de coupe.

**2.** Méthode selon la revendication 1, **caractérisée en ce que** la lumière détectée résulte d'une interaction linéaire ou non linéaire de l'éclairage avec l'échantillon ou une partie de celui-ci.

**3.** Méthode selon la revendication 2, **caractérisée en ce qu'**on sépare les N longueurs d'ondes d'excitation différentes en se basant sur un codage en phases ou en fréquences obtenu à partir des différences de phases ou de fréquences.

**4.** Méthode selon une des revendications précédentes, **caractérisée en ce qu'**on on réalise un balayage simultané sous forme de ligne avec plusieurs lignes.

**5.** Méthode selon une des revendications précédentes, **caractérisée en ce que** lors du calcul d'images de phases ($I_j$ (x) avec la phase d'image $\varphi_i$) avec codage des phases des longueurs d'ondes d'excitation ($\Phi_j$), on calcule des images qui contiennent des informations caractéristiques d'images de la coupe pseudo-confocale ($C_j$) et du fond ($B_j$) pour les $j$-èmes longueurs d'ondes d'excitation respectives :

$$I_0(x) = \sum_{j=1}^{n} C_j(x) \cdot \cos(k \cdot x + \phi_j + \varphi_0) + B_j(x)$$

$$I_1(x) = \sum_{j=1}^{n} C_j(x) \cdot \cos(k \cdot x + \phi_j + \varphi_1) + B_j(x)$$

$$I_2(x) = \sum_{j=1}^{n} C_j(x) \cdot \cos(k \cdot x + \phi_j + \varphi_2) + B_j(x)$$

$$\ldots$$

$$I_n(x) = \sum_{j=1}^{n} C_j(x) \cdot \cos(k \cdot x + \phi_j + \varphi_n) + B_j(x)$$

où

$$\begin{pmatrix} c_{11} & c_{12} & \ldots & \ldots \\ c_{21} & c_{22} & \ldots & \ldots \\ \ldots & \ldots & \ldots & \ldots \\ c_{n1} & c_{n2} & \ldots & c_{nn} \end{pmatrix} \cdot \begin{pmatrix} C_1 \\ C_2 \\ \ldots \\ C_n \end{pmatrix} = \begin{pmatrix} I_1 - I_0 \\ I_2 - I_0 \\ \ldots \\ I_n - I_0 \end{pmatrix}$$

avec $C_{ij}(x) = \cos(k.x + \Phi_j + \varphi_i) - \cos(k.x + \Phi_j)$.

**6.** Méthode selon une des revendications précédentes, **caractérisée en ce qu'**on fait varier l'épaisseur optique de la coupe en représentant des structures avec différentes fréquences de modulation.

**7.** Méthode selon la revendication 6, **caractérisée en ce que** lors de l'éclairage avec plusieurs longueurs d'ondes d'excitation, on règle l'épaisseur identique de la coupe par l'intermédiaire d'une adaptation de la fréquence de modulation respective.

**8.** Méthode selon une des revendications précédentes, **caractérisée en ce qu'**on réalise le codage de phase des longueurs d'ondes d'excitation en fractionnant la lumière d'éclairage en ses composantes spectrales, on représente les composantes dans un plan focal et les composantes étant influencées dans le plan focal ou à proximité en fonction de la longueur d'onde d'excitation, et on fusionne ensuite à nouveau les composantes.

**9.** Méthode selon la revendication 8, **caractérisée en ce qu'**on réalise le fractionnement spectral dans une image intermédiaire.

**10.** Méthode selon une des revendications précédentes, **caractérisée en ce qu'**on réalise le codage de fréquence des longueurs d'ondes d'excitation en modifiant l'échelle de reproduction en fonction des longueurs d'ondes d'excitation.

**11.** Méthode selon une des revendications précédentes, **caractérisée en ce que** la détection décompose la lumière provenant de l'échantillon au niveau spectral.

**12.** Méthode selon une des revendications précédentes, **caractérisée en ce que**

- pour la modulation de l'amplitude de l'éclairage, on décompose un rayon lumineux comportant plusieurs longueurs d'ondes d'excitation, en plusieurs rayons lumineux partiels,
- on les superpose par interférométrie et on en forme une ligne, et
- on règle la période de la structure d'intensité et ainsi l'épaisseur optique de la coupe par l'intermédiaire de la variation de l'angle de superposition des rayons partiels.

**13.** Méthode selon une des revendications précédentes, **caractérisée en ce qu'**on génère les signaux de fluorescence détectés par excitation de la fluorescence multi photons et/ou par génération d'harmoniques plus élevées de la fréquence de la lumière.

**14.** Application de la méthode selon une des revendications précédentes par des mesures de la durée de vie de la fluorescence de la lumière émise par l'échantillon.

**15.** Dispositif de détection optique à résolution de la profondeur d'un échantillon au moyen de fluorescence multiple, comprenant

- des moyens d'éclairage de l'échantillon par point ou sous forme de ligne avec au moins une longueur d'onde d'excitation,
- des moyens pour la modulation de l'amplitude de l'éclairage de l'échantillon dans la focalisation,
- des moyens pour générer un mouvement relatif entre l'échantillon et la lumière d'éclairage,
- un détecteur pour enregistrer la lumière fluorescente provenant de l'échantillon,
- des moyens pour générer des images de fluorescence de l'échantillon à partir la lumière fluorescente, ainsi que
- des moyens pour calculer une image de coupe optique à partir des images de fluorescence,
- **caractérisé en ce que**
- les moyens pour éclairer l'échantillon éclairent l'échantillon simultanément avec N longueurs d'ondes d'excitation différentes, N étant un nombre naturel N > 1,
- les moyens de modulation d'amplitude, attribuent une modulation d'amplitude à chacune de ces longueurs d'ondes d'excitation, les modulations d'amplitudes des longueurs d'ondes d'excitation se distinguant des longueurs d'ondes d'excitation du point de vue phase et/ou fréquence,
- le détecteur est apte à enregistrer N+1 images de fluorescence, les moyens de modulation d'amplitude déplaçant pour chaque image de fluorescence, la modulation d'amplitude par rapport à l'échantillon, ainsi que par l'intermédiaire
- des moyens pour l'évaluation simultanée des images de fluorescence de l'échantillon à l'aide de l'image de coupe.

**16.** Dispositif selon la revendication 15, **caractérisé en ce qu'**au moins un scanner est prévu comme moyen pour la génération du mouvement relatif.

**17.** Dispositif selon la revendication 15 ou 16, **caractérisé en ce qu'**on a prévu une unité pour le fractionnement et la fusion de la lumière d'éclairage dans ses composantes spectrales, une optique de reproduction pour la reproduction des composantes spectrales étant prévue dans un plan focal et un moyen pour la structuration de la lumière d'éclairage en fonction de la longueur d'onde étant prévu dans le plan focal ou à proximité.

**18.** Dispositif selon la revendication 17, **caractérisé en ce qu'**on effectue un fractionnement dispersif dans un plan image intermédiaire.

**19.** Dispositif selon une des revendications 15 à 18, **caractérisé en ce qu'**on a prévu une lame plan parallèle basculée dans une image intermédiaire pour la génération d'un décalage parallèle par rapport à l'axe optique de la lumière d'éclairage en fonction des longueurs d'ondes d'excitation.

**20.** Dispositif selon une des revendications 15 à 19, **caractérisé en ce qu'**on a prévu un élément optique structuré en ce qui concerne la transparence, tournant autour de l'axe optique, comme moyen pour la modulation d'amplitude de l'éclairage.

**21.** Dispositif selon la revendication 20, **caractérisé en ce que** l'élément est assemblé à partir de plusieurs parties structurées différemment en ce qui concerne la transparence.

**22.** Dispositif selon une des revendications 20 ou 21, **caractérisé en ce que** l'élément peut coulisser perpendiculairement à l'axe optique.

**23.** Dispositif selon une des revendications 15 à 22, **caractérisé en ce que** la position d'au moins un scanner est ajustable pour le réglage de différentes phases de l'image.

**24.** Dispositif selon une des revendications 15 à 23, **caractérisé en ce qu'**on a prévu des grilles de différentes périodicités pouvant être basculées dans le chemin des rayons pour le réglage de différentes structures fréquentielles.

25. Dispositif selon une des revendications 15 à 24, **caractérisé en ce que**

- pour l'éclairage, on a prévu un rayon lumineux comportant N longueurs d'ondes d'excitation différentes,
- on a prévu des moyens pour décomposer le rayon lumineux en plusieurs rayons partiels, de préférence sous la forme de séparation par pupilles pour la génération des rayons partiels, et
- des moyens pour la superposition par interférométrie de ces rayons partiels dans l'échantillon.

26. Dispositif selon la revendication 25, **caractérisé en ce qu'**on a prévu une séparation par pupilles, un miroir en V, une séparation de rayons avec deux miroirs agissant de concert ou un double prisme de Fresnel pour la génération des rayons partiels.

27. Dispositif selon la revendication 26, **caractérisé en ce que** le double prisme peut tourner autour de l'axe optique de manière à pouvoir régler différentes phases de l'image.

28. Dispositif selon la revendication 26, **caractérisé en ce que** le miroir en V peut tourner autour de l'axe optique de manière à pouvoir régler différentes phases de l'image.

29. Dispositif selon la revendication 26, **caractérisé en ce que** l'angle du miroir en V peut être modifié de manière à pouvoir régler différentes structures fréquentielles.

30. Dispositif selon la revendication 25, **caractérisé en ce qu'**on a prévu un séparateur de rayons avec deux miroirs agissant de concert pour la génération des rayons partiels.

31. Dispositif selon la revendication 30, **caractérisé en ce qu'**un des miroirs est monté pour pouvoir coulisser de manière à permettre le réglage de différentes phases de l'image.

32. Dispositif selon la revendication 30 ou 31, **caractérisé en ce que** le séparateur de rayons est monté pour pouvoir tourner de manière à permettre le réglage de différentes structures fréquentielles.

33. Dispositif selon la revendication 30 ou 31, **caractérisé en ce qu'**au moins un des miroirs est monté pour pouvoir tourner de manière à permettre le réglage par rotation de différentes structures fréquentielles.

34. Dispositif selon une des revendications 25 à 33, **caractérisé en ce qu'**on a prévu un détecteur bidimensionnel à résolution géométrique précédé d'au moins un élément dispersif, dans lequel on détecte dans une des deux dimensions, les composantes spectrales de la lumière fluorescente provenant de l'échantillon, fractionnées par l'élément dispersif.

a.)                                    b.)

Abb.: 1

# LSM / Linienscanner -Stand der Technik

Mikroskop  Laser Scanning Modul  Lichtquellen (1)

Abb.: 2

## Strukturierte Beleuchtung - Stand der Technik

Phasenbild (PB)

| $\Phi = 0°$ |
|---|

| $\Phi = 120°$ |
|---|

| $\Phi = 240°$ |
|---|

Image Processing

optisches Schnittbild

Abb.: 3

EP 1 248 132 B1

Linienfokus

Phasenbild (PB)

optisches Schnittbild

Φ = 0°

Φ = 120°

Φ = 240°

Scanfeld

Image Processing

Abb.: 4

EP 1 248 132 B1

EP 1 248 132 B1

Scanfeld

Abb.: 5

Linienfokus

Phasenbilder n+1

$\Phi = 0°$

$\Phi = 360°/(n+1)$

$\Phi = 2\cdot360°/(n+1)$

$\Phi = n\cdot360°/(n+1)$

Scanfeld

Image Processing

Multifluoreszenz
optisches Schnittbild

EP 1 248 132 B1

Abb.: 6

A.)

Amplitudengitter / Struktur

Anregungslicht

d

P

x

γ

z

A

Δx

Lateralversatz

B.)

Y

X

C.)

f    f    f    f

Y

z

L 1

L 2

L 3

DG 1    Linse1    ST    Linse2    DG 2

D.)

Y

L 1

L 2

L 3

X

Abb.: 7

Abb.: 8

Abb.: 9

—— Objektstrahlengang für die X-Ebene

- - - Pupillenstrahlengang für die X-Ebene

A.)

LQ    ST    ZL    Scanner X    ZB    Scanner Y    ZB
                              RL    MDB    SO    TL
                                                O    PR

PE

PO

SB

DE

——— Objektstrahlengang für die X-Ebene

- - - - Pupillenstrahlengang für die X-Ebene

B.)

LQ    ST    ZL    Scanner Y
                  MDB    SO    TL
                              O    PR

PE

PO

SB

DE

X

Y

Z

Abb.: 10

EP 1 248 132 B1

Abb.: 11

Objektstrahlengang für die X-Ebene

Pupillenstrahlengang für die X-Ebene

Abb.: 12

Ortskoordinate x
Linienscanner

Spektrale Emissionscharakteristik

Y

PR

O

TL

ZB

SO

Scanner Y

ZB

RL

Scanner X / DG

ZL

ST

PE

LQ

PO

SB

PR

DE

X

Y

Z

Objektstrahlengang für die X-Ebene

Pupillenstrahlengang für die X-Ebene

Abb.: 13

Beleuchtungsintensität

Linienfoki

optisches Schnittbild

$\Phi = 0°$

Image Processing

$\Phi = 120°$

Scanfeld

$\Phi = 240°$

Abb.: 14

EP 1 248 132 B1

Element nach Abb. 16 A/B

Scanfeld

Abb.: 15

EP 1 248 132 B1

A.)

EP 1 248 132 B1

B.)

Abb.: 16

Multi - Color
Optical Sectioning

Image Processing

Multi-Color          Phase, sequentiell
Linien-Scanner

L 1

L 2

L 3

Y

Z

X

Ortskoordinate
Linienscanner

L1
L2
L3

Spektrale
Emissionscharakteristik

Abb.: 17

Abb.: 18

Scanner X    RL    Scanner Y    SO    ST    MDB    TL    O

LQ

TV-Port

PE

X

Y

Z

- - - - - ·  Objektstrahlengang für die X-Ebene

————  Pupillenstrahlengang für die X-Ebene

PR

EP 1 248 132 B1

Abb.: 19

Abb.: 20

EP 1 248 132 B1

Abb.: 21

Abb.: 22

A.)

EP 1 248 132 B1

Lichtquellenmodul

LQ  ZL  ZB

X

Y

Z

Scanner X  ZB  Scanner Y  ZB

MDB  RL  SO  TL

O  PR

PO

SB

DE

———— Objektstrahlengang für die X-Ebene

- - - - - - Pupillenstrahlengang für die X-Ebene

B.)

Lichtquellenmodul

LQ  ZL  ZB

Y

X

Z

Scanner X  ZB  Scanner Y  ZB

RL  SO  TL  O

MDB

PR

Abb.: 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- US 6167173 A
- DE 19829981 A1
- WO 9845745 A, Wilson
- US 4826299 A
- DE 19904592 A1

**In der Beschreibung aufgeführte Nicht-Patentliteratur**

- **Pawley.** Handbook of Biological Confocal Microscopy. Plenum Press, 1995
- **Corle, Kino.** Confocal Scanning Optical Microscopy and Related Imaging Systems. Academic Press, 1996
- **Wilson et al.** Method of obtaining optical sectioning by using structured light in a conventional microscope. *Optics Letters,* 1997, vol. 22 (24
- **T. Wilson et al.** Method of obtaining optical sectioning by using structured light in a conventional microscope. *Optics Letters,* 1997, vol. 22 (24
- **Stimson et al.** *Rev. Of Sc. Instr.,* 1999, 3351
- **Buist et al.** *J. o. Microscopy,* 1998, 217
- **Nielsen et al.** *J. o. Microscopy,* 2001, 368
- **Hell et al.** *Journal of Microscopy,* Juni 2001, vol. 202, 457-463
- Diffractive optics improve product design. Photonics Spectra. Laurin Publishing Co., Inc, September 1995